# EUROPÄISCHE PATENTANMELDUNG

(11) **EP 2 227 951 A1**
(43) Veröffentlichungstag der Anmeldung: **15.09.2010**
(21) Anmeldenummer: 09151231.9
(22) Anmeldetag: 23.01.2009
(51) Int. Cl.: A01N 43/40, A01N 43/78, A01P 7/04

(54) **Verwendung von Enaminocarbonylverbindungen zur Bekämpfung von durch Insekten übertragenen Viren**

(71) Anmelder: Bayer CropScience AG, 40789 Monheim (DE)
(72) Erfinder: Die Erfindernennung liegt noch nicht vor

(57) **Zusammenfassung**

Verwendung von Enaminocarbonylverbindungen der Formel (I) 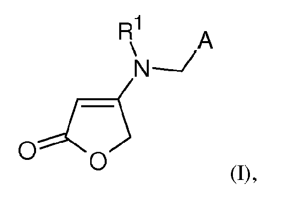 worin
R¹ und A die in der Beschreibung angegebenen Bedeutungen haben,
oder von Wirkstoffkombinationen, die aus bekannten Enaminocarbonylverbindungen einerseits und weiteren bekannten insektiziden Wirkstoffen andererseits bestehen, zur Bekämpfung von durch Vektoren (Insekten) übertragenen Virosen.

## Beschreibung

Die vorliegende Erfindung betrifft die Verwendung von Enaminocarbonylverbindungen allein und auch von Wirkstoffkombinationen, die aus bekannten Enaminocarbonylverbindungen einerseits und weiteren bekannten insektiziden Wirkstoffen andererseits bestehen, zur Bekämpfung von durch Vektoren (Insekten) übertragenen Virosen.

Als Vektoren oder Virus Vektoren im Sinne der vorliegenden Erfindung werden Insekten, beispielsweise Aphiden (Blattläuse), Weiße Fliegen, Zikaden oder Thripse, verstanden, die Pflanzenviren auf Pflanzen übertragen können. Weitere Vektoren, die Pflanzenviren übertragen können, sind Spinnmilben, Läuse, Käfer und Nematoden.

Enaminocarbonylverbindungen sind beispielsweise als Mittel zur Bekämpfung von tierischen Schädlingen, insbesondere Insekten und Akariden, bekannt geworden und können nach bekannten Verfahren hergestellt werden (z. B. EP 0 539 588 A, WO 2006/037475 A, WO 2007/115643, WO 2007/115644 und WO 2007/115646). Desweiteren ist die insektizide und akarizide Wirkungssteigerung für einzelne Enaminocarbonylverbindungen mittels Zugabe von geeigneten Salzen und gegebenenfalls Additiven beschrieben (WO 2007/068355).

Es ist bereits die Verwendung von insektiziden Wirkstoffen allein und auch von Mischungen bekannt, die sich zur Bekämpfung von durch Vektoren (Insekten) übertragenen Virosen eignen. Beispielsweise ist die Verwendung von Mischungen, die Pyrethroide und Pyrimicarb oder Tetramsäure-Derivate und bekannte Insektizide enthalten, zur Bekämpfung von durch Vektoren (Insekten) übertragenen Virosen bereits bekannt geworden ((R. M. Perrin, British Crop Prot. Conf.-Pests and Diseases 3, 989-996, 1986), EP-A 237227 A1, EP-A 2011394 A1). Desweiteren ist beispielsweise eine Methode zur Kontrolle der Ausbreitung nicht-persistenter Pflanzenviren bekannt, bei der spezielle, langkettige Carbonsäuren in Gegenwart von Oberflächenbehandlungsmitteln verwendet werden (FR 2842706 A1). Darüber hinaus ist auch die Verwendung von Mischungen aus einem bekannten Insektizid und einem Mineralöl zur Bekämpfung von Vektoren (Insekten), die Pflanzenviren übertragen können, beschrieben (DD 100135). Bekannt geworden ist auch die Virusbekämpfung über eine Saatgutbehandlung in den Kulturen Zuckerrübe und im Getreide, beispielsweise mit dem Wirkstoff Imidacloprid (H. E. Schmerr et al., Brighton Crop Prot Conf.-Pest and Diseases 1, 29-36, 1990; G. M. Tatchel Pflanzenschutz-Nachrichten Bayer 45, 409-422, 1992; R. Altmann, A. Elbert, Mitt. Dtsch. Ges. Allg. Angew. Ent. 8, 212-221, 1992; A. Elbert et al., Imidacloprid, a Novel Chloronicotinyl Insecticide: Biological Activity and Agricultural Importance. in: Insecticides with Novel Modes of Action, I. Ishaaya, D. Degheele, Eds., Springer Verlag, Chapter 4, S.50-73; A. Qi et al., Pest. Manag. Sci. 60, 727-732, 2004).

Allerdings ist die Wirksamkeit dieser insektiziden Wirkstoffe allein und auch in Mischungen nicht immer zufrieden stellend.

Hinsichtlich der erforderlichen Qualität und Ertragssicherung von Kulturpflanzen, haben virale Erkrankungen der Kulturpflanzen weltweit eine zunehmende Bedeutung.

Die Beziehung zwischen einem Pflanzenvirus und dem Virus Vektor (Insekt) ist oftmals sehr spezifisch. Beispielsweise können Vektoren (Insekten) mit viralen Partikeln, die sich in der infizierten Pflanze befinden, kontaminiert werden ("acquisition"). Die Vektoren (Insekten) bleiben dann für eine bestimmte Zeit und in bestimmter Art und Weise infiziert ("retention") und schließlich kann der Virus vom Vektor (Insekt) weiter auf eine andere Pflanze übertragen werden ("inoculation"). Die Pflanzenschäden hängen von der Art des Virus, der Populationsdichte des Vektors (Insekts) und dem Entwicklungsgrad der Pflanze ab. Die Verhinderung von Ertragsverlusten durch Virusbefall insbesondere unter starken Befallsbedingungen erfordert eine schnelle und effiziente Problemlösung.

Ein besonderes Problem ist in diesem Zusammenhang, dass die Vektoren (Insekten) gegen herkömmliche Insektizide wie beispielsweise Organophosphate, Carbamate, Organochlorverbindungen, Pyrethroide oder auch Neonikotinoide, zunehmend eine Resistenz entwickeln und somit die Bekämpfung von Vektoren (Insekten), die Pflanzenviren übertragen können, nicht mehr gewährleistet ist (vgl. O. Edwards, L. Lawrence, Shoud be worried about insecticide resistance in aphids. Pesticide Outlook, 104-106, 2003).

Darüber hinaus führt der Schutz von Nutzpflanzen durch Behandlung mit herkömmlichen Insektiziden auch in mit Plastikfolie abgedeckten Gewächshäusern zu unbefriedigenden Ergebnissen. Es besteht somit ein sehr großer Bedarf an neuen Insektiziden, die für eine Bekämpfung von durch Vektoren (Insekten) übertragenen Virosen Anwendung finden.

Da im agrarwirtschaftlichen Bereich kein anti-virales Mittel bekannt ist, ist die einzige effektive Möglichkeit der Bekämpfung von Virosen, die virusübertragenden Vektoren (Insekten) zu bekämpfen. Die Mehrzahl der bekannten Pflanzenviren kann von Vektoren (Insekten) der Ordnung *Hemiptera,* beispielsweise den ökonomisch bedeutsamen Aphiden (Blattläusen), Weißen Fliegen und Zikaden oder der Ordnung *Tysanoptera,* wie beispielsweise Thripse, übertragen werden. Gemeinsam übertragen die Aphiden (Blattläusen) und Weißen Fliegen 325 Pflanzenviren Spezies (S. A. Hogenhout et al., Annu. Rev. Phytopathol. 46, 327-359, 2008). Dazu zählen 110 Planzenviren Spezies vom Genus *Potyvirus,* die bevorzugt von Aphiden (Blattläuse) übertragen werden und 115 Pflanzenviren Spezies vom Genus *Begomovirus,* die bevorzugt von der Weißen Fliege übertragen werden. Darüber hinaus können Pflanzenviren beispielsweise auch von Spinnmilben, Läusen, Käfern oder Nematoden übertragen werden.

Gegenwärtig sind vier Mechanismen beschrieben, nach denen Insekten Pflanzenviren übertragen können. Ursprünglich wurden Pflanzenviren bezüglich ihrer Übertragung in nicht-persistente und persistente Pflanzenviren eingeteilt (M. A. Watson, F. M. Roberts, Proc. R. Soc. Lonon Ser. B 127, 543-546, 1939). Später wurde festgestellt, dass auch semi-persistente Pflanzenviren existieren (z. *B. Cauliflower mosaic virus,* CaMV). Die persistenten Pflanzenviren können weiter in persistente zirkulative Viren (z. *B. Luteoviridae, Geminiviridae, Nanoviridae*) und persistente propagative Viren (d.h. es erfolgt eine Replikation im Vektor) unterteilt werden (z. *B. Bunyaviridae, Rhabdoviridae, Reoviridae, Tymoviridae*) (L. R. Nault, Ann. Entomol. Soc. Am. 90, 521-541, 1997). Während die nicht-persistenten Viren, nach Übertragung durch den Vektor (Insekt), nur einige Sekungen für die Infizierung der Pflanze benötigen, kann die Infizierung der Pflanze durch *semi-*persistente Viren bis zu einigen Stunden dauern. Die nicht-persistenten Viren haften oft am Saugrüssel bzw. Stilett der Insekten und können bereits mechanisch während des Anstechens eines Pflanzenteils durch den Vektor (Insekt) oder mittels Speichelfluss des Vektors (Insekts) übertragen werden, d.h. die Verhinderung einer Primärinfektion ist oftmals erschwert. Andererseits lässt sich die Weiterverbreitung der Viren durch eine effiziente Bekämpfung der Vektoren (Insekten) mittels neuer Insektizide signifikant reduzieren. Hierbei ist sowohl die schnelle Wirksamkeit des eingesetzten Insektizids bei Kontaktwirkung als auch die Bekämpfung der Vektoren (Insekten) mittels Boden- und Saatgutbehandlung von Vorteil (systemische Wirksamkeit).

Die persistenten Pflanzenviren bewegen sich durch den gesamten Vektor (Insekt), vom Darmlumen in die Hämolymphe oder in andere Gewebe und erreichen schließlich die Speicheldrüse aus der die Viren beim Saugen des Vektors (Insekts) an der Pflanze übertragen werden. Die persistenten Viren bleiben auch nach Häutung des Vektors (Insekt) erhalten.

Zur Familie der *Luteoviridae* gehören die Genera *Enamovirus, Luteovirus* und *Polerovirus* (C. M. Fauquet et al., Virus Taxonomy: Classification and Nomenclature of Viruses. Eight Rep. Int. Comm. Taxon. Viruses. San Diego: Elsevier Academic). Diese drei Genera verfügen über ein nur marginal differenziertes Genom. Zum Genus *Enamovirus* gehört beispielsweise das *Pea enation mosaic virus 1* (PEMV1). Die PEMV Viren können Pflanzenzellen in verschiedenen Geweben, einschließlich Epidermiszellen, infizieren.

Zur Familie der *Geminiviridae* gehören die Genera *Mastrevirus, Curtovirus, Begomovirus* und *Topocuvirus* (C. Gutierrez, Geminivirus DNA Replikation. Cell. Mol. Life Sci. 56, 313-329, 1999). Zum Genus *Topocuvirus* gehört beispielsweise das *Tomato pseudocurly top virus* (TPCTV), das insbesondere durch den Treehopper *M. malleifera* (*Hemiptera: Membracidae*) übertragen wird (R. W. Briddon et al., Virology 219, 387-394, 1996). Zum Genus *Mastrevirus* gehört beispielsweise das ökonomisch sehr bedeutsame *Maize streak virus* (MSV), das von neun Blattzikaden Spezies des Genus *Cicaduliua* übertragen werden kann (N. A. Bosque-Perez, Virus Res. 71, 107-121, 2000). Die Persistenz von MSV im Vektor (Insekt) ist sehr effizient; beispielsweise bleiben C. *mbila* Spezies nach ihrer Infizierung bis zu 35 Tage infektiös und können somit dieses Virus übertragen. Zum Genus *Curtovirus* gehört beispielsweise das *Beet curly top virus* (BCTV), das von der Rüben Blattzikade *Circulifer tenellus* (Baker) auf bis zu 300 Pflanzenarten übertragen werden kann. Der Genus *Begomovirus* enthält Spezies der Familie *Geminiviridae.* Die Wechselvirkung des *Begomovirus* mit dem Vektor Weiße Fliege ist sehr komplex. Hierzu gehören beispielsweise das *Tomato yellow leaf curl virus* (TYLCV), *Tomato yellow leaf curl Sardinia virus* (TYLCSV), *Tomato yellow leaf curl China virus* (TYLCCSV), *Tomato mottle virus* (ToMoV), *Tobacco curly shoot virus* (TbCSV).

Zur Familie der *Nanoviridae* gehören die Genera *Babuvirus* und *Nanovirus* (B. Groneborn, Nanoviruses: Genome Organisation and Protein Function. Vet. Microbiol. 98, 103-109, 2004). Zum Genus *Babuvirus* gehört beispielsweise das *Banana bunchy top virus* (BBTV) und zum Genus *Nanovirus* gehört beispielsweise das ökonomisch sehr bedeutsame Bohnenvirus *Faba bean necrotic yellow virus* (FBNYV).

Alle umhüllten Pflanzenviren, beispielsweise *Bunyaviren* und *Rhabdoviren,* werden in einer persistent propagativen Art und Weise übertragen.

Bekannterweise können mit jedem Vektor (Insekt), mit jeder Vektorpopulation oder jedem Vektorbiotyp, abhängig vom Geschlecht des Vektors (Insekts) oder des Entwicklungsstatiums (Nymphen/Adulten), auch Unterschiede bei der Virusübertragung auftreten (L. R. Nault, Arthropod Transmission of Plant Viruses: A New Synthesis. Ann. Entomol. Soc. Am. 90, 521-541, 1997).

Der Genus *Tospovirus* gehört zur Familie der *Bunyaviridae.* Diese Familie umfasst über 350 Virenspezies, die in fünf Genera eingeteilt werden können: *Santa-, Nairo-, Orthobunya-, Phlebo-* und *Tosboviren* (S. T. Nichol, Bunyaviruses. In: Fields Virology, Ed. D. M. Knipe, P. M. Howley, S. 1603-1633. New York: Lippincott Williams & Wilkins). Letztere sind sehr bedeutsam, da diese insbesondere pflanzeninfizierende Viren sind; alle anderen Genera infizieren bevorzugt Vertebraten. Zum Genus *Tospovirus* gehört beispielsweise das *Tomato spotted wilt virus* (TSWV).

Die Familie der *Rhabdoviridae* umfasst Viren die sowohl auf Vertebraten, Invertebraten, und Pflanzen einschließlich Pathogene des Menschen, der Nutztiere und Nutzpflanzen übertragen werden können (Z. F. Fu, Genetic Comparison of the Rhabdoviruses from Animals and Plants. In: World of Rhabdoviruses. Current Topics in Microbiology and Immonology. Ed. Z. F. Fu, H. Koprowski, S. 1-24, Heidelberg/Berlin: Springer Verlag). Zu den pflanzeninfizierenden Viren gehören beispielsweise die zwei Genera *Nucleorhobdovirus* und *Cytorhabdovirus.* Zum Genus *Nucleorhobdovirus* gehört beispielsweise das *Sonchus yellow net virus* (SYNV), *Maize mosaic virus* (MMV), *Taro vein chlorosis virus* (TaVCV), *Rice yellow stunt virus* (RYSV) und *Maize fine streak virus* (MFSV). Zum Genus *Cytorhabdovirus* gehört beispielsweise das *Nothern cereal mosaic virus* (NCMV) und das Lettuce necrotic yellow virus (LNYV).

Der Genus *Tenuivirus* umfasst neben dem *Maize stripe virus* (MStV) und *Rice stripe virus* (RSV) auch den *Maize yellow stripe virus* (MYSV). Beispielsweise können Tenuiviren in sehr kurzer Zeit (10 Minuten bis 4 Stunden) von Vektoren (Insekten) über infizierte Pflanzen aufgenommen werden.

Die Familie *Reoviridae* umfasst neun Genera, von denen die Genera *Orbireovirus, Coltivirus, Cypovirus* Insekten als Vektoren infizieren können, während die Genera *Fijiviruses, Phytoreovirus* und *Oryzavirus* Spezies, auch Pflanzen infizieren können. Die transovariale Übertragung von Reoviren in Vektoren (Insekten) wurde für den *Fiji disease virus* (FDV), *Oat sterile dwarf virus* (OSDV), *Maize rough dwarf virus* (MRDV), *Nilaparvata lugens virus* (NLV), *Rice dwarf virus* (RDV), *Wound tumor virus* (WTV) und *Rice gall dwarf virus* (RGDV) gezeigt. Zum Genus *Fujivirus* gehören beispielsweise auch das *Rice black streaked dwarf virus* (RBSDV) und das *Male de Rio Cuarto virus* (MRCV).

Schließlich umfasst die Familie *Tymoviridae* den Genus *Marafivirus,* zu dem beispielsweise das *Maize ryado fino virus* (MRFV) gehört (basierend auf Struktur des Genoms; vgl. G. P. Martelli et al., The Family Tymoviridae. Arch. Virol. 147, 1837-1846, 2002).

Da die Vektoren (Insekten) die Viren übertragen, bevor sie durch den Wirkstoff bzw. die Wirkstoffkombination abgetötet werden, ist eine schnelle initiale Wirkung des Wirkstoffs bzw. der Wirkstoffmischung erforderlich.

Über die Verwendung von Enaminocarbonylverbindungen allein und auch in Wirkstoffkombinationen, die bekannte Enaminocarbonylverbindungen einerseits und weiteren bekannte insektizide Wirkstoffe andererseits enthalten, zur Bekämpfung von durch Vektoren (Insekten) übertragenen Virosen ist bislang nichts bekannt. Es ist insbesondere nicht bekannt, ob Enaminocarbonylverbindungen allein oder auch in Wirkstoffkombinationen mit bekannten insektiziden Wirkstoffen die virusübertragenden Vektoren (Insekten) ausreichend schnell abtöten, um eine Virusverbreitung zu verhindern.

Es wurde nun gefunden, dass Verbindungen der Formel (I) 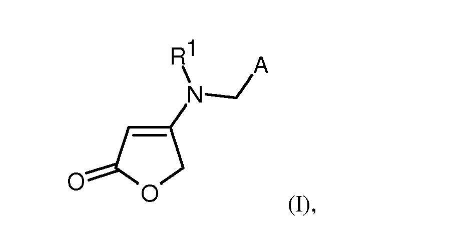 in welcher
- A: für Pyrid-2-yl oder Pyrid-4-yl steht oder für Pyrid-3-yl, welches gegebenenfalls in 6-Position substituiert ist durch Fluor, Chlor, Brom, Methyl, Trifluormethyl oder Trifluormethoxy oder für Pyridazin-3-yl, welches gegebenenfalls in 6-Position substituiert ist durch Chlor oder Methyl oder für Pyrazin-3-yl oder für 2-Chlor-pyrazin-5-yl oder für 1,3-Thiazol-5-yl, welches gegebenenfalls in 2-Position substituiert ist durch Chlor oder Methyl, oder
- A: für einen Rest Pyrimidinyl, Pyrazolyl, Thiophenyl, Oxazolyl, Isoxazolyl, 1,2,4-Oxa-diazolyl, Isothiazolyl, 1,2,4-Triazolyl oder 1,2,5-Thiadiazolyl steht, welcher gegebenenfalls durch Fluor, Chlor, Brom, Cyano, Nitro, C₁-C₄-Alkyl (welches gegebenenfalls durch Fluor und/oder Chlor substituiert ist), C₁-C₃-Alkylthio (welches gegebenenfalls durch Fluor und/oder Chlor substituiert ist), oder C₁-C₃-Alkylsulfonyl (welches gegebenenfalls durch Fluor und/oder Chlor substituiert ist), substituiert ist,
oder
- A: für einen Rest 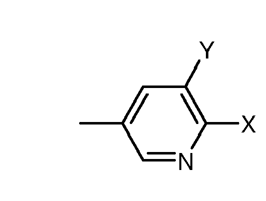
steht,
in welchem
- X: für Halogen, Alkyl oder Halogenalkyl steht
- Y: für Halogen, Alkyl, Halogenalkyl, Halogenalkoxy, Azido oder Cyano steht und
- R¹: für Alkyl, Halogenalkyl, Alkenyl, Halogenalkenyl, Alkinyl, Cycloalkyl, Cycloalkylalkyl, Halogencycloalkyl, Alkoxy, Alkoxyalkyl, oder Halogencycloalkylalkyl steht,
sowie Wirkstoffkombinationen enthaltend mindestens eine Verbindung der Formel (I) und mindestens eine Verbindung ausgewählt aus der Gruppe bestehend aus
(A) Nikotinerge Acetylcholin-Rezeptor-Agonisten/-Antagonisten, bevorzugt
   (2-1) Thiacloprid (bekannt aus der EP A2 0 235 725) 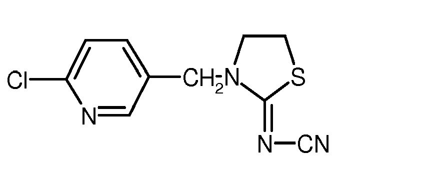
   (2-2) Dinotefuran (bekannt aus der EP A1 0 649 845) 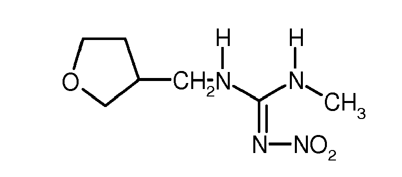
   (2-3) Acetamiprid (bekannt aus der WO A1 91/04965) 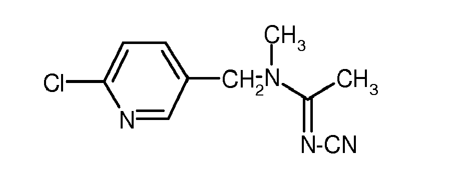
   (2-4) Nitenpyram (bekannt aus der EP-A 0 302 389) 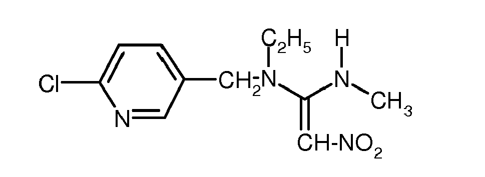
   (2-5) Imidacloprid (bekannt aus der EP-B 0 192 060) 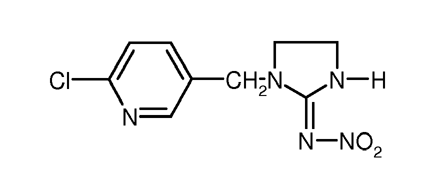
   (2-6) Imidaclothiz (bekannt aus "Modern Agrochemicals", Vol. 4, No. 3, June 2005) 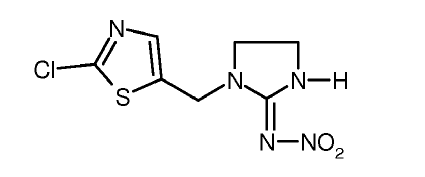
   (2-7) AKD-1022 (bekannt aus der EP 0 428 941) 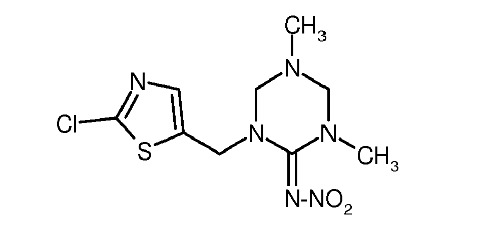
   (2-8) Thiamethoxam (bekannt aus der EP A2 0 580 553) 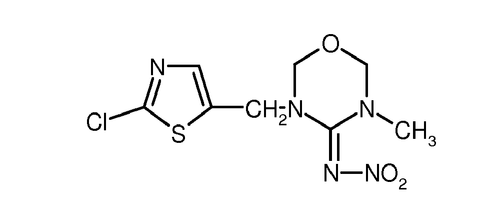
   (2-9) Clothianidin (bekannt aus der EP A2 0 376 279) 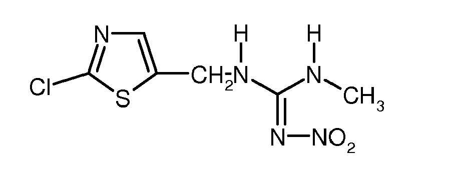
   (2-10) Sulfoxaflor (ISO-proposed; bekannt aus der WO 2007/095229 A2, WO 2007/149134 A1) 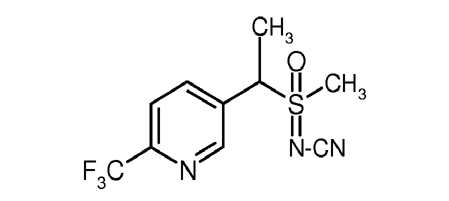
(B) Allosterische Acetylcholin-Rezeptor-Modulatoren (Agonisten), wie beispielsweise Spinosyne, bevorzugt
   (2-11) Spinosad (bekannt aus EP-A 0 375 316) 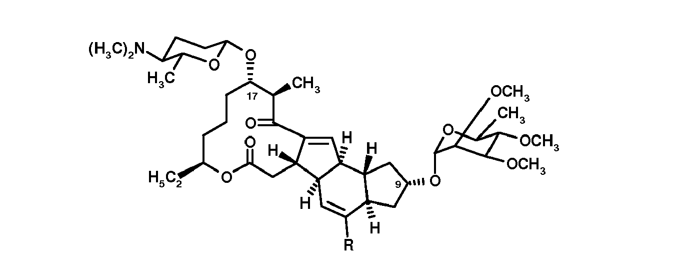 ein Gemisch aus bevorzugt
      85% Spinosyn A (R = H)
      15 % Spinosyn B (R = CH₃)
   (2-12) Spinetoram (ISO-proposed; XDE-175) (bekannt aus WO 97/00265 A1, US 6001981 und PestManag. Sci. 57, 177-185, 2001) 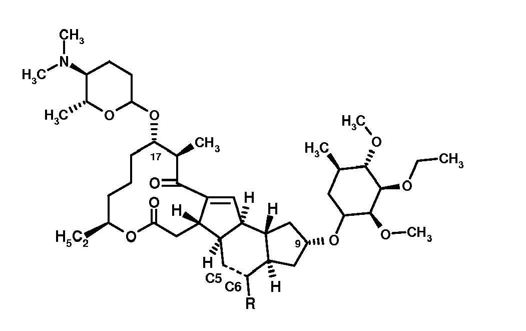 einer Mischung aus zwei Verbindungen, wobei als Hauptkomponente R für Wasserstoff steht und C5 und C6 durch eine C-C-Einfachbindung miteinander Verknüpft sind und in der Nebenkomponente R für Methyl steht und C5 und C6 durch eine C=C-Doppelbindung miteinander verknüpft sind.
(C) Chlorid-Kanal-Aktivatoren, wie beispielsweise Mectine / Macrolide, bevorzugt
   (2-13) Abamectin (bekannt aus DE-A 27 17 040) 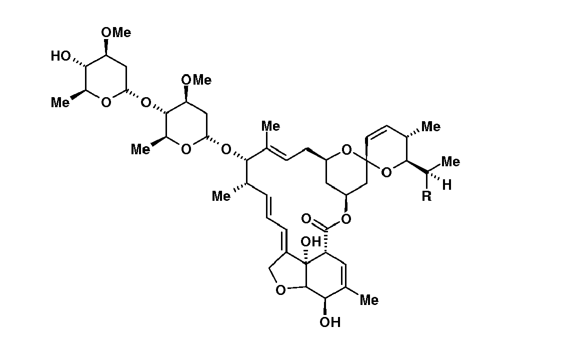 ein Gemisch aus bevorzugt
      >80 % Avermectin B₁ₐ (R = C₂H₅)
      <20 % Avermectin B_{1b} (R = CH₃)
   (2-14) Emamectin-Benzoat (bekannt aus EP-A 0 089 202) 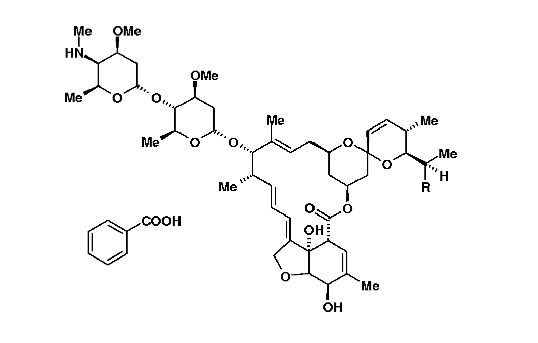 ein Gemisch aus bevorzugt
      >90 % Emamectin B₁ₐ (R = C₂H₅)
      <10 % Emamectin B_{1b} (R = CH₃)
   (2-15) Milbemectin (bekannt aus JP 50029742) 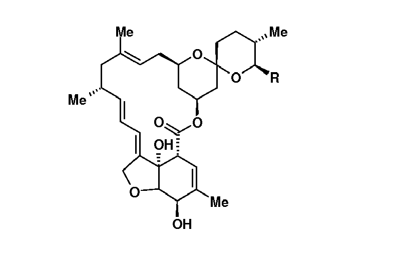 ein Gemisch aus bevorzugt
      Milbemycin A₃ (R = CH₃) und
      Milbemycin A₄ (R = C₂H₅) im Verhältnis
      von 3:7
   (2-16) Lepimectin (ISO-proposed, SI-0009) (6*R*,13,*R*,25*R*)-5-O-demethyl-28-deoxy-6,28-epoxy-13-[[(methoxyimino)phenylacetyl]oxy]-25-methyl-milbemycin-B, (6*R*,13,*R*,25*R*)-5-O-demethyl-28-deoxy-6,28-epoxy-25-ethyl-13-[[(methoxyimino)phenylacetyl]oxy]milbemycin-B (bekannt aus EP-A 675 133) 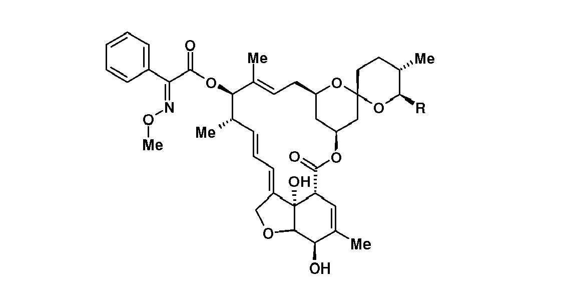 ein Gemisch aus bevorzugt
      (R = C₂H₅) und (R = CH₃),
      wobei die Ethylverbindung (R = C₂H₅)
      mit 80-100 % Anteil die Hauptkomponente ist.
(D) GABA-gesteuerte Chlorid-Kanal-Antagonisten, bevorzugt
   (2-17) Fipronil (bekannt aus EP-A 0 295 117) 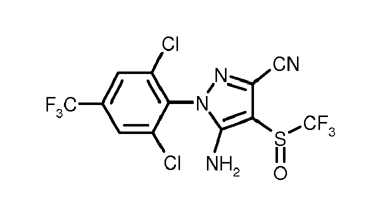
   (2-18) Ethiprole (bekannt aus DE-A 196 53 417) 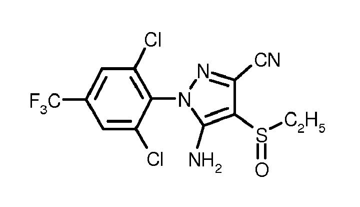
(E) Natrium-Kanal-Modulatoren / Spannungsabhängige Natrium-Kanal-Blocker, bevorzugt
   (2-19) Beta-cyfluthrin (bekannt aus EP-A-206 149) 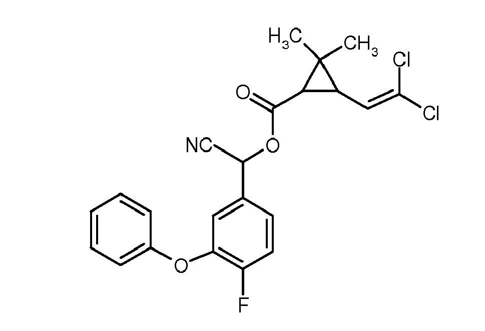
   (2-20) Cypermethrin (bekannt aus DE-A-2 326 077) 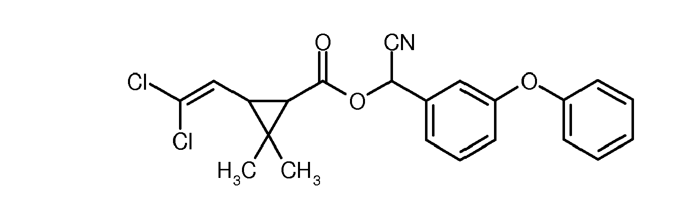
   (2-21) Deltamethrin (bekannt aus DE-A-2 326 077) 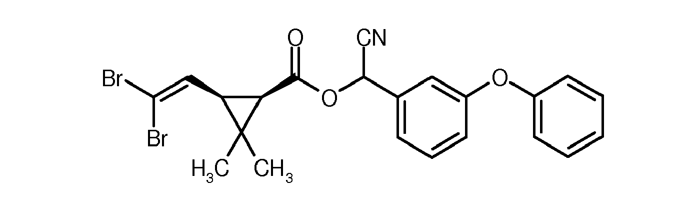
   (2-22) Lambda-cyhalothrin (bekannt aus EP-A-106 469) 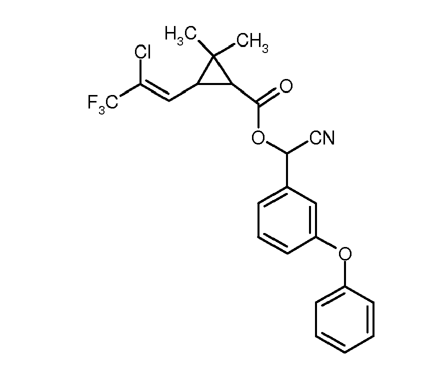
   (2-23) Cyfluthrin (bekannt aus DE-A-27 09 264) 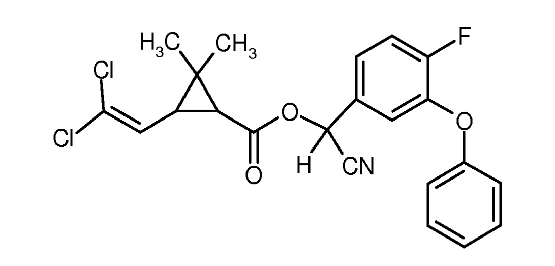
   (2-24) Tefluthrin (bekannt aus EP-A 1 31 199) 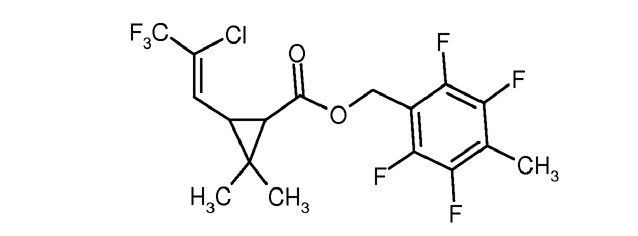
   (2-25) Transfluthrin (bekannt aus EP 2 79 325) 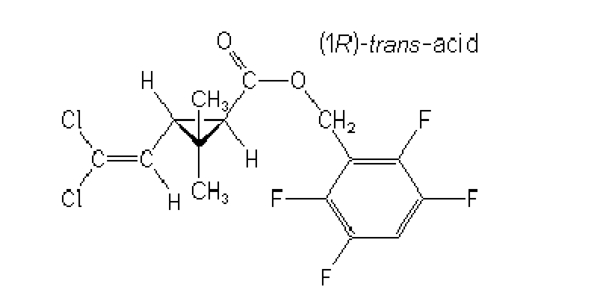
(F) Spannungsabhängige Natriumkanal-Blocker, bevorzugt
   (2-26) Indoxacarb (bekannt aus WO 92/11249) 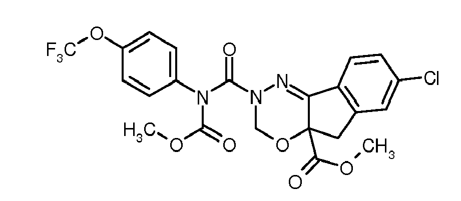 und / oder
   (2-27) Metaflumizone (ISO-proposed, BAS 320) 2-[2-(4-Cyanophenyl)-1-[3-(trifluoromethyl)phenyl]ethylidene]-N-[4-(trifluoromethoxy)phenyl] hydrazinecarboxamid (bekannt aus EP-A 00462456) 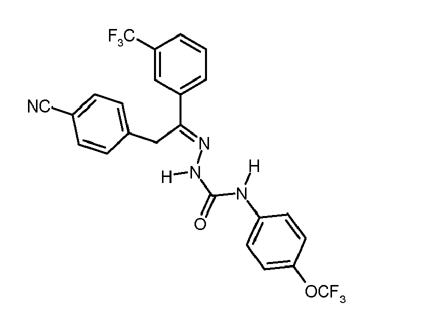
(G) Inhibitoren der Fettsäurebiosynthese, wie beispielsweise Tetronsäure-Derivate, bevorzugt
   (2-28) Spirodiclofen (bekannt aus DE 4 216 814) 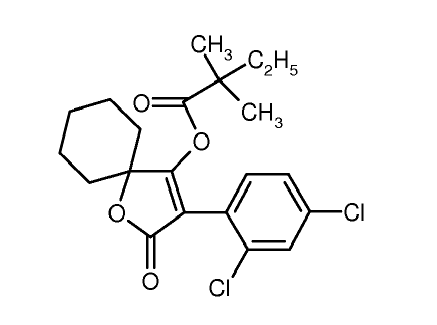
   (2-29) Spiromesifen (bekannt aus DE 4 216 814) 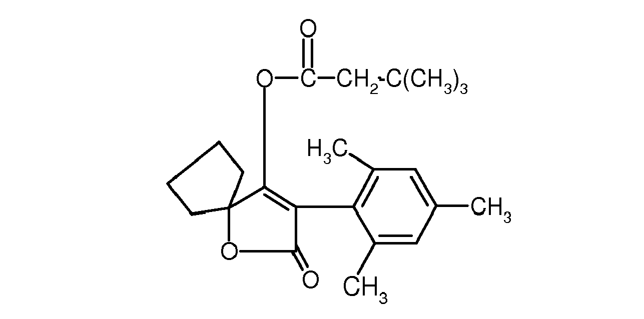 oder Tetramsäure-Derivate, bevorzugt
   (2-30) Spirotetramat (bekannt aus WO 98005638) 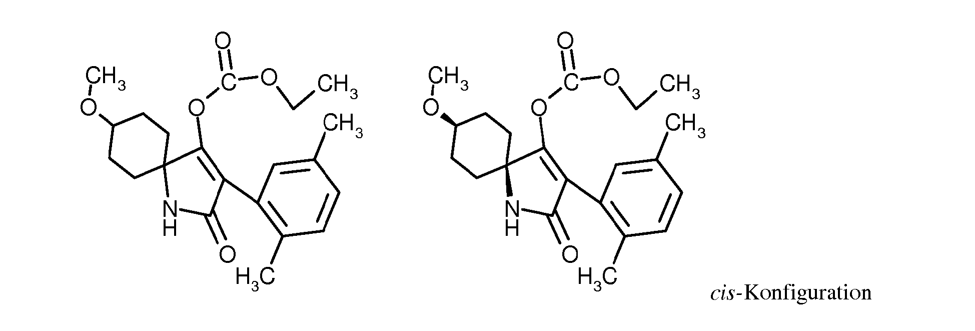 wobei die Verbindung der Formel (2-27) in der *cis*-Konfiguration (bekannt aus EP-A-01523472) oder als Gemisch der *cis*- und *trans*-Konfiguration vorliegen kann,
(H) Ryanodinrezeptor-Effektoren, wie beispielsweise Diamide, bevorzugt
   (2-31) Flubendiamide (bekannt aus EP-A 1 006 107) 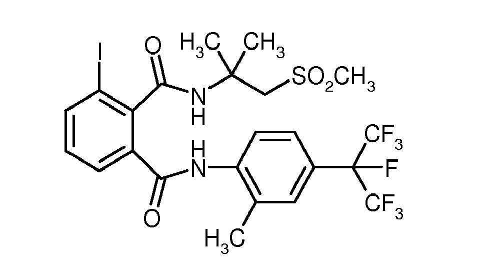
   (2-32) Rynaxypyr (ISO-proposed; Chlorantraniliprole, DPX-E2Y45) (3-Bromo-N-{4-chlor-2-methyl-6-[(methylamino)carbonyl]phenyl}-1-(3-chlorpyridin-2-yl)-1*H*-pyrazol-5-carboxamid) (bekannt aus WO 03/015519) 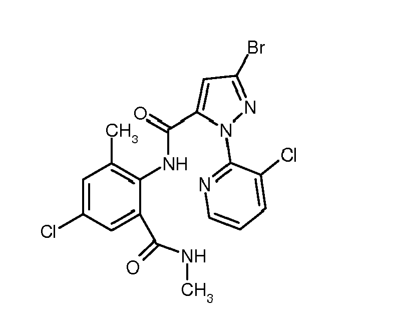
   (2-33) Cyazypyr (ISO-proposed) (3-Bromo-N-{4-cyan-2-methyl-6-[(methylamino) carbonyl]phenyl}-1-(3-chlorpyridin-2-yl)-1H-pyrazol-5-carboxamid) (bekannt aus WO 2004067528) 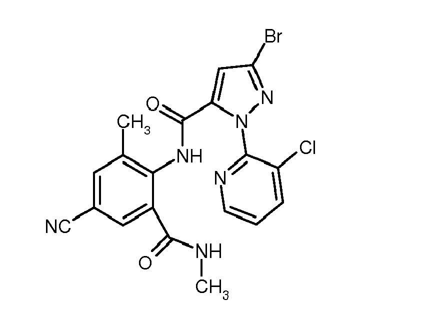
(I) Wirkstoffe mit unbekannten oder nicht spezifischen Wirkmechanismen, bevorzugt
   (2-34) Pyrifluquinazon (ISO-proposed, NNI-0101) 1-Acetyl-1,2,3,4-tetrahydro-3-[(3-pyridylmethyl)amino]-6-[1,2,2,2-tetrafluoro-1-(trifluoromethyl)ethyl] quinazolin-2-on (bekannt aus EP-A 01097932) 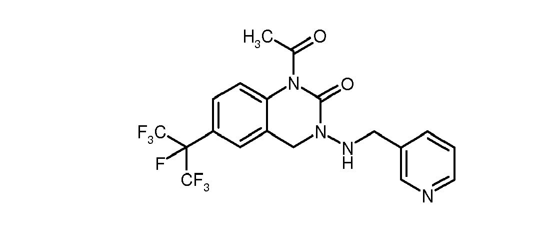
   (2-35) Flonicamid (bekannt aus EP-A 0 580 374) 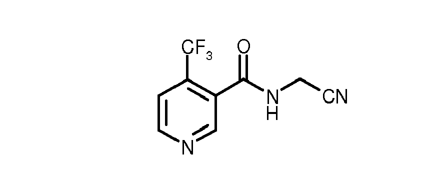
(J) Acetylcholinesterase (AChE) Inhibitoren, wie beispielsweise Carbamate, bevorzugt
   (2-36) Methiocarb (bekannt aus DE-A 11 62 352) 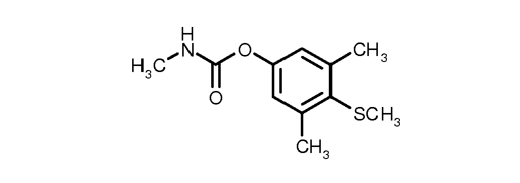
   (2-37) Thiodicarb (bekannt aus DE-A 25 30 439) 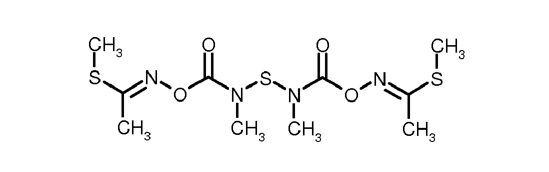
   besonders gut zur Verhinderung von Virusausbreitungen in Kulturpflanzen wie Soja, Baumwolle, Rüben, Mais, Reis, Kartoffeln, (insbesondere auch bei Saatkartoffelproduktion), Tabak, Getreide, tropische Früchte, Gemüse und Zierpflanzen geeignet sind. Besonders bevorzugt ist die Bekämpfung von durch Insekten übertragenen Virosen in Rüben, Mais, Reis, Kartoffel, Tabak, Getreide und Gemüse.

Bevorzugt sind die praxisrelevanten Pflanzenviren, wie beispielsweise das *Serano golden mosaic virus* (SGMV), *Tobacco etch virus* (TEV), *Bean golden mosaic virus* (BGMV), *Cassava latend virus* (CLV), *Tomato golden Mosaic virus* (TGMV), *Maize streak virus* (MSV), *Tomato spotted wilt virus* (TSWV), *Tobacco mosaic virus* (TMV), *Tobacco ringspot virus* (TRV), *Cucumber mosaic virus* (CMV), *Tomato mosaic virus* (ToMV), *Tomato golden mosaic virus* (TGMV), *Potato virus Y* (PVY), *Tomato leaf roll virus* (TLRV), *Potato yellow mosaic virus* (PYMV), *Potato leaf roll virus* (PLRV), *Tomatoe yellow leaf curl virus* (TYLCV), *Barley yellow dwarf virus* (BYDV), *Beet mosaic virus* (BtMV), *Beet yellow virus* (BYV), *Faba bean necrotic yellow virus* (FBNYV), *Rice tungro bacilliform virus* (RTBV), *Rice tungro virus* (RTV) und das *Beet western yellow virus* (BWYV).

Ein bevorzugter Gegenstand der Erfindung ist die Verwendung von Verbindungen der Formel (I) oder von den unten in Tabellen 1 bis 10 aufgeführten Wirkstoffkombinationen zur Bekämpfung von durch Aphiden, Weißen Fliegen, Zikaden, Thripse, Spinnmilben, Läusen, Käfern oder Nematoden übertragenen Virosen.

Überraschenderweise wurde gefunden, dass sich die erfindungsgemäßen Enaminocarbonylverbindungen allein und auch in Wirkstoffkombinationen, die bekannte Enaminocarbonylverbindungen einerseits und weitere bekannte insektizide Wirkstoffen andererseits enthalten, zur Bekämpfung von durch Vektoren (Insekten) übertragenen Virosen einsetzen lassen.

Weiterhin überraschend ist, dass die Wirkung der Wirkstoffkombinationenauf die Virusausbreitung wesentlich höher ist als die Summe der Wirkungen der einzelnen Wirkstoffe. es liegt ein nicht vorhersehbarer echter synergistischer Effekt vor und nicht nur eine Wirkungsergänzung.

Bevorzugt einsetzbar sind Enaminocarbonylverbindungen allein und auch in Wirkstoffkombinationen, die bekannte Enaminocarbonylverbindungen einerseits und weitere bekannte insektizide Wirkstoffen andererseits enthalten, zur Bekämpfung von durch Vektoren (Insekten) übertragenen Virosen, wobei die Rest in den Verbindungen der Formel (I) die folgende Bedeutung haben:
- A: steht bevorzugt für 6-Fluor-pyrid-3-yl, 6-Chlor-pyrid-3-yl, 6-Brom-pyrid-3-yl, 6-Methyl-pyrid-3-yl, 6-Trifluormethyl-pyrid-3-yl, 6-Trifluormethoxypyrid-3-yl, 6-Chlor-1,4-pyridazin-3-yl, 6-Methyl-1,4-pyridazin-3-yl, 2-Chlor-1,3-thiazol-5-yl oder 2-Methyl-1,3-thiazol-5-yl, 2-Chlor-pyrimidin-5-yl, 2-Trifluormethyl-pyrimidin-5-yl, 5,6-Difluor-pyrid-3-yl, 5-Chlor-6-fluor-pyrid-3-yl, 5-Brom-6-fluor-pyrid-3-yl, 5-lod-6-fluor-pyrid-3-yl, 5-Fluor-6-chlor-pyrid-3-yl, 5,6-Dichlor-pyrid-3-yl, 5-Brom-6-chlor-pyrid-3-yl, 5-Iod-6-chlor-pyrid-3-yl, 5-Fluor-6-brom-pyrid-3-yl, 5-Chlor-6-brom-pyrid-3-yl, 5,6-Dibrom-pyrid-3-yl, 5-Fluor-6-iod-pyrid-3-yl, 5-Chlor-6-iod-pyrid-3-yl, 5-Brom-6-iod-pyrid-3-yl, 5-Methyl-6-fluor-pyrid-3-yl, 5-Methyl-6-chlor-pyrid-3-yl, 5-Methyl-6-brom-pyrid-3-yl, 5-Methyl-6-iod-pyrid-3-yl, 5-Difluormethyl-6-fluor-pyrid-3-yl, 5-Difluormethyl-6-chlor-pyrid-3-yl, 5-Difluormethyl-6-brom-pyrid-3-yl oder 5-Difluormethyl-6-iod-pyrid-3-yl.
- R¹: steht bevorzugt für gegebenenfalls durch Fluor substituiertes C₁-C₅-Alkyl, C₂-C₅-Alkenyl, C₃-C₅-Cycloalkyl, C₃-C₅-Cycloalkylalkyl oder Alkoxy.
- A: steht besonders bevorzugt für den Rest 6-Fluor-pyrid-3-yl, 6-Chlor-pyrid-3-yl, 6-Brom-pyrid-3-yl, 6-Chlor-1,4-pyridazin-3-yl, 2-Chlor-1,3-thiazol-5-yl, 2-Chlor-pyrimidin-5-yl, 5-Fluor-6-chlor-pyrid-3-yl, 5,6-Dichlor-pyrid-3-yl, 5-Brom-6-chlor-pyrid-3-yl, 5-Fluor-6-brom-pyrid-3-yl, 5-Chlor-6-brom-pyrid-3-yl, 5,6-Dibrom-pyrid-3-yl, 5-Methyl-6-chlor-pyrid-3-yl, 5-Chlor-6-iod-pyrid-3-yl oder 5-Difluormethyl-6-chlor-pyrid-3-yl.
- R¹: steht besonders bevorzugt für Methyl, Methoxy, Ethyl, Propyl, Vinyl, Allyl, Propargyl, Cyclopropyl, 2-Fluor-ethyl, 2,2-Difluor-ethyl oder 2-Fluor-cyclopropyl.
- A: steht ganz besonders bevorzugt für den Rest 6-Fluor-pyrid-3-yl, 6-Chlor-pyrid-3-yl, 6-Brom-pyrid-3-yl, 5-Fluor-6-chlor-pyrid-3-yl, 2-Chlor-1,3-thiazol-5-yl oder 5,6-Dichlor-pyrid-3-yl.
- R¹: steht ganz besonders bevorzugt für Methyl, Cyclopropyl, Methoxy, 2-Fluorethyl oder 2,2-Difluor-ethyl.
- A: steht am meisten bevorzugt für den Rest 6-Chlor-pyrid-3-yl oder 5-Fluor-6-chlor-pyrid-3-yl.
- R¹: steht am meisten bevorzugt für Methyl, 2-Fluorethyl oder 2,2-Difluor-ethyl.

In einer hervorgehobenen Gruppe von Verbindungen der Formel (I) steht A für 6-Chlor-pyrid-3-yl

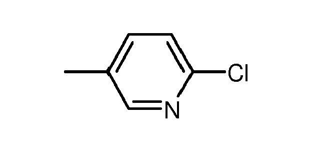

In einer weiteren hervorgehobenen Gruppe von Verbindungen der Formel (I) steht A für 6-Brom-pyrid-3-yl

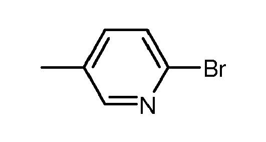

In einer weiteren hervorgehobenen Gruppe von Verbindungen der Formel (I) steht A für 6-Chlor-1,4-pyridazin-3-yl-

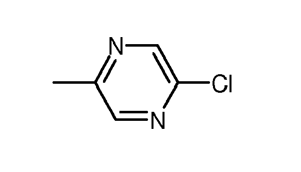

In einer weiteren hervorgehobenen Gruppe von Verbindungen der Formel (I) steht A für 2-Chlor-1,3-thiazol-5-yl-

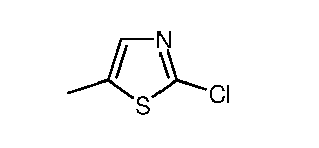

In einer weiteren hervorgehobenen Gruppe von Verbindungen der Formel (I) steht A für 5-Fluor-6-chlor-pyrid-3-yl,

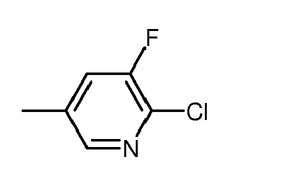

In einer weiteren hervorgehobenen Gruppe von Verbindungen der Formel (I) steht A für 5-Fluor-6-brom-pyrid-3-yl,

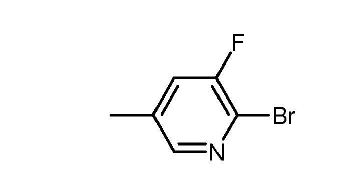

In einer weiteren hervorgehobenen Gruppe von Verbindungen der Formel (I) steht A für 5,6-Dichlor-pyrid-3-yl,

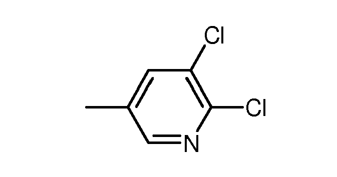

In einer weiteren hervorgehobenen Gruppe von Verbindungen der Formel (I) steht R¹ für Methyl.

In einer weiteren hervorgehobenen Gruppe von Verbindungen der Formel (I) steht R¹ für Ethyl.

In einer weiteren hervorgehobenen Gruppe von Verbindungen der Formel (I) steht R¹ für Cyclopropyl.

In einer weiteren hervorgehobenen Gruppe von Verbindungen der Formel (I) steht R¹ für 2-Fluorethyl.

In einer weiteren hervorgehobenen Gruppe von Verbindungen der Formel (I) steht R¹ für 2,2-Difluorethyl.

Die oben aufgeführten allgemeinen oder in Vorzugsbereiche aufgeführten Restedefinitionen bzw. Erläuterungen können untereinander, also auch zwischen den jeweiligen Vorzugsbereichen, beliebig kombiniert werden.

Erfindungsgemäß bevorzugt werden Verbindungen der Formel (I), in welchen eine Kombination der vorstehend als bevorzugt aufgeführten Bedeutungen vorliegt.

Erfindungsgemäß besonders bevorzugt werden Verbindungen der Formel (I), in welchen eine Kombination der vorstehend als besonders bevorzugt aufgeführten Bedeutungen vorliegt.

Erfindungsgemäß ganz besonders bevorzugt werden Verbindungen der Formel (I), in welchen eine Kombination der vorstehend als ganz besonders bevorzugt aufgeführten Bedeutungen vorliegt.

Eine bevorzugte Untergruppe der Verbindungen der Formel (I) sind solche der Formel (I-a) 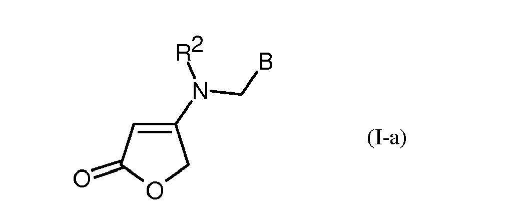 in welcher
- B: für Pyrid-2-yl oder Pyrid-4-yl steht oder für Pyrid-3-yl, welches gegebenenfalls in 6-Position substituiert ist durch Fluor, Chlor, Brom, Methyl, Trifluormethyl oder Trifluor-methoxy oder für Pyridazin-3-yl, welches gegebenenfalls in 6-Position substituiert ist durch Chlor oder Methyl oder für Pyrazin-3-yl oder für 2-Chlor-pyrazin-5-yl oder für 1,3-Thiazol-5-yl, welches gegebenenfalls in 2-Position substituiert ist durch Chlor oder Methyl,
- R²: für Halogenalkyl, Halogenalkenyl, Halogencycloalkyl oder Halogencycloalkylalkyl steht.

Bevorzugte Substituenten bzw. Bereiche der in der oben und nachstehend erwähnten Formel (I-a) aufgeführten Reste werden im Folgenden erläutert.
- B: steht bevorzugt für 6-Fluor-pyrid-3-yl, 6-Chlor-pyrid-3-yl, 6-Brom-pyrid-3-yl, 6-Methyl-pyrid-3-yl, 6-Trifluormethyl-pyrid-3-yl, 6-Trifluormethoxypyrid-3-yl, 6-Chlor-1,4- pyridazin-3-yl, 6-Methyl-1,4-pyridazin-3-yl, 2-Chlor-1,3-thiazol-5-yl oder 2-Methyl-1,3-thiazol-5-yl.
- R²: steht bevorzugt für durch Fluor substituiertes C₁-C₅-Alkyl, C₂-C₅-Alkenyl, C₃-C₅-Cycloalkyl oder C₃-C₅-Cycloalkylalkyl.
- B: steht besonders bevorzugt für den Rest 6-Fluor-pyrid-3-yl, 6-Chlor-pyrid-3-yl, 6-Brompyrid-3-yl, 6-Chlor-1,4-pyridazin-3-yl, 2-Chlor-1,3-thiazol-5-yl.
- R²: steht besonders bevorzugt für 2-Fluor-ethyl, 2,2-Difluor-ethyl, 2-Fluor-cyclopropyl.
- B: steht ganz besonders bevorzugt für den Rest 6-Chlor-pyrid-3-yl.
- R²: steht ganz besonders bevorzugt für 2-Fluor-Ethyl oder 2,2-Difluor-ethyl.

In einer hervorgehobenen Gruppe von Verbindungen der Formel (I-a) steht B für 6-Chlor-pyrid-3-yl

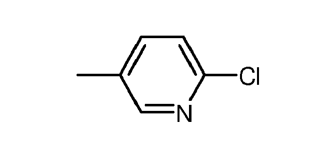

In einer weiteren hervorgehobenen Gruppe von Verbindungen der Formel (I-a) steht B für 6-Brom-pyrid-3-yl

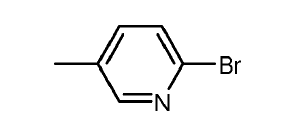

In einer weiteren hervorgehobenen Gruppe von Verbindungen der Formel (I-a) steht B für 6-Chlor-1,4-pyridazin-3-yl-

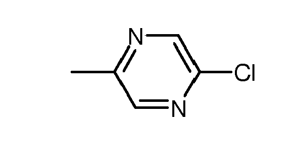

In einer weiteren hervorgehobenen Gruppe von Verbindungen der Formel (I-a) steht R² für 2-Fluorethyl.

In einer weiteren hervorgehobenen Gruppe von Verbindungen der Formel (I-a) steht R² für 2,2-Difluorethyl.

Eine weitere bevorzugte Untergruppe der der Verbindungen der Formel (I) sind solche der Formel (I-b) 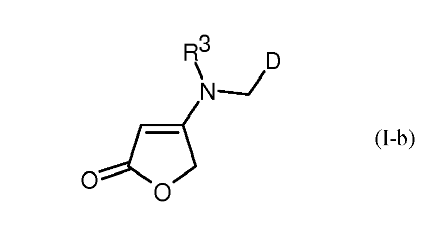 in welcher
- D: für einen Rest 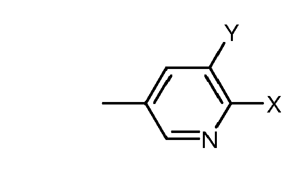
steht
in welchem
X und Y die oben angegebenen Bedeutungen haben,
- R³: für Wasserstoff, Alkyl, Alkenyl, Alkinyl, Cycloalkyl oder Alkoxy steht,

Bevorzugte Substituenten bzw. Bereiche der in der oben und nachstehend erwähnten Formel (I-b) aufgeführten Reste werden im Folgenden erläutert.
- D: steht bevorzugt für einen der Reste 5,6-Difluor-pyrid-3-yl, 5-Chlor-6-fluor-pyrid-3-yl, 5-Brom-6-fluor-pyrid-3-yl, 5-Iod-6-fluor-pyrid-3-yl, 5-Fluor-6-chlor-pyrid-3-yl, 5,6-Dichlorpyrid-3-yl, 5-Brom-6-chlor-pyrid-3-yl, 5-Iod-6-chlor-pyrid-3-yl, 5-Fluor-6-brom-pyrid-3-yl, 5-Chlor-6-brom-pyrid-3-yl, 5,6-Dibrom-pyrid-3-yl, 5-Fluor-6-iod-pyrid-3-yl, 5-Chlor-6-iod-pyrid-3-yl, 5-Brom-6-iod-pyrid-3-yl, 5-Methyl-6-fluor-pyrid-3-yl, 5-Methyl-6-chlor-pyrid-3-yl, 5-Methyl-6-brom-pyrid-3-yl, 5-Methyl-6-iod-pyrid-3-yl, 5-Difluormethyl-6-fluor-pyrid-3-yl, 5-Difluormethyl-6-chlor-pyrid-3-yl, 5-Difluormethyl-6-brom-pyrid-3-yl, 5-Difluormethyl-6-iod-pyrid-3-yl.
- R³: steht bevorzugt für C₁-C₄-Alkyl, C₂-C₄-Alkenyl, C₂-C₄-Alkinyl oder C₃-C₄-Cycloalkyl.
- D: steht besonders bevorzugt für 5-Fluor-6-chlor-pyrid-3-yl, 5,6-Dichlor-pyrid-3-yl, 5-Brom-6-chlor-pyrid-3-yl, 5-Fluor-6-brom-pyrid-3-yl, 5-Chlor-6-brom-pyrid-3-yl, 5,6-Dibrom- pyrid-3-yl, 5-Methyl-6-chlor-pyrid-3-yl, 5-Chlor-6-iod-pyrid-3-yl oder 5-Difluormethyl-6-chlor-pyrid-3-yl.
- R³: steht besonders bevorzugt für C₁-C₄-Alkyl.
- D: steht ganz besonders bevorzugt für 5-Fluor-6-chlor-pyrid-3-yl oder 5-Fluor-6-brom-pyrid-3-yl.
- R³: steht ganz besonders bevorzugt für Methyl, Ethyl, Propyl, Vinyl, Allyl, Propargyl oder Cyclopropyl.
- D: steht am meisten bevorzugt für 5-Fluor-6-chlor-pyrid-3-yl.
- R³: steht am meisten bevorzugt für Methyl oder Cyclopropyl.

In einer weiteren hervorgehobenen Gruppe von Verbindungen der Formel (I-b) steht D für 5-Fluor-6-chlor-pyrid-3-yl,

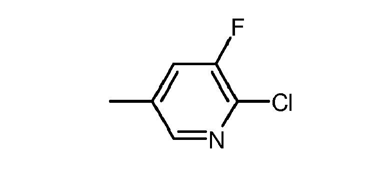

In einer weiteren hervorgehobenen Gruppe von Verbindungen der Formel (I-b) steht D für 5,6-Dichlor-pyrid-3-yl

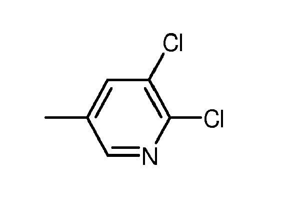

In einer weiteren hervorgehobenen Gruppe von Verbindungen der Formel (I-b) steht D für 5-Brom-6-chlor-pyrid-3-yl

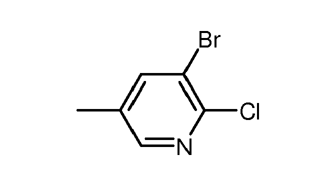

In einer weiteren hervorgehobenen Gruppe von Verbindungen der Formel (I-b) steht D für 5-Methyl-6-chlor-pyrid-3-yl

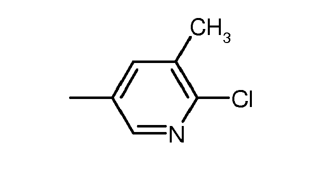

In einer weiteren hervorgehobenen Gruppe von Verbindungen der Formel (I-b) steht D für 5-Fluor-6-brom-pyrid-3-yl

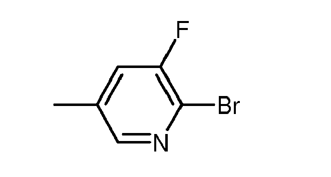

In einer weiteren hervorgehobenen Gruppe von Verbindungen der Formel (I-b) steht D für 5-Chlor-6-brom-pyrid-3-yl

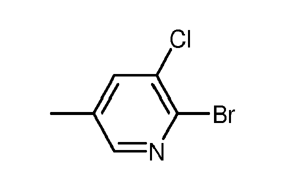

In einer weiteren hervorgehobenen Gruppe von Verbindungen der Formel (I-b) steht D für 5-Chlor-6-iod-pyrid-3-yl

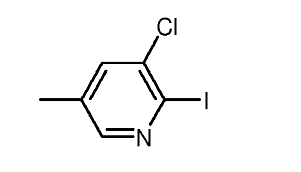

In einer weiteren hervorgehobenen Gruppe von Verbindungen der Formel (I-b) steht R³ für Methyl.

In einer weiteren hervorgehobenen Gruppe von Verbindungen der Formel (I-b) steht R³ für Ethyl.

In einer weiteren hervorgehobenen Gruppe von Verbindungen der Formel (I-b) steht R³ für Cyclopropyl.

Eine weitere bevorzugte Untergruppe der Verbindungen der Formel (I) sind solche der Formel (I-c) 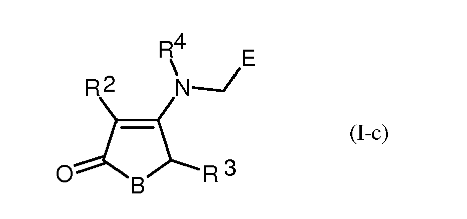 in welcher 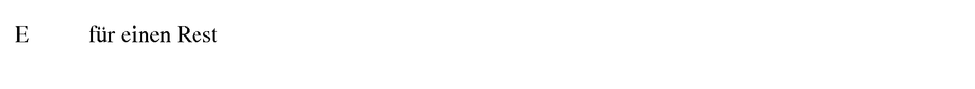 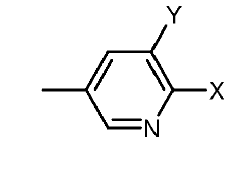 steht
in welchem
- X und: Y die oben angegebenen Bedeutungen haben und
- R⁴: für Halogenalkyl, Halogenalkenyl, Halogencycloalkyl oder Halogencycloalkylalkyl steht.

Bevorzugte Substituenten bzw. Bereiche der in der oben und nachstehend erwähnten Formel (I-c) aufgeführten Reste werden im Folgenden erläutert.
- E: steht bevorzugt für einen der Reste 5,6-Difluor-pyrid-3-yl, 5-Chlor-6-fluor-pyrid-3-yl, 5-Brom-6-fluor-pyrid-3-yl, 5-Iod-6-fluor-pyrid-3-yl, 5-Fluor-6-chlor-pyrid-3-yl, 5,6-Dichlor-pyrid-3-yl, 5-Brom-6-chlor-pyrid-3-yl, 5-Iod-6-chlor-pyrid-3-yl, 5-Fluor-6-brom-pyrid-3-yl, 5-Chlor-6-brom-pyrid-3-yl, 5,6-Dibrom-pyrid-3-yl, 5-Fluor-6-iod-pyrid-3-yl, 5-Chlor-6-iod-pyrid-3-yl, 5-Brom-6-iod-pyrid-3-yl, 5-Methyl-6-fluor-pyrid-3-yl, 5-Methyl-6-chlorpyrid-3-yl, 5-Methyl-6-brom-pyrid-3-yl, 5-Methyl-6-iod-pyrid-3-yl, 5-Difluormethyl-6-fluor-pyrid-3-yl, 5-Difluormethyl-6-chlor-pyrid-3-yl, 5-Difluormethyl-6-brom-pyrid-3-yl, 5-Difluormethyl-6-iod-pyrid-3-yl.
- R⁴: steht bevorzugt für durch Fluor substituiertes C₁-C₅-Alkyl, C₂-C₅-Alkenyl, C₃-C₅-Cycloalkyl oder C₃-C₅-Cycloalkylalkyl.
- E: steht besonders bevorzugt für 2-Chlor-pyrimidin-5-yl, 5-Fluor-6-chlor-pyrid-3-yl, 5,6-Dichlor-pyrid-3-yl, 5-Brom-6-chlor-pyrid-3-yl, 5-Fluor-6-brom-pyrid-3-yl, 5-Chlor-6- brom-pyrid-3-yl, 5,6-Dibrom-pyrid-3-yl, 5-Methyl-6-chlor-pyrid-3-yl, 5-Chlor-6-iod-pyrid-3-yl oder 5-Difluormethyl-6-chlor-pyrid-3-yl.
- R⁴: steht besonders bevorzugt für 2-Fluor-ethyl, 2,2-Difluor-ethyl, 2-Fluor-cyclopropyl.
- E: steht ganz besonders bevorzugt für 5-Fluor-6-chlor-pyrid-3-yl.
- R⁴: steht ganz besonders bevorzugt für 2-Fluor-ethyl oder 2,2-Difluor-ethyl.

In einer weiteren hervorgehobenen Gruppe von Verbindungen der Formel (I-c) steht E für 5-Fluor-6-chlor-pyrid-3-yl,

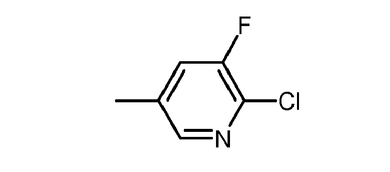

In einer weiteren hervorgehobenen Gruppe von Verbindungen der Formel (I-c) steht E für 5,6-Dichlor-pyrid-3-yl

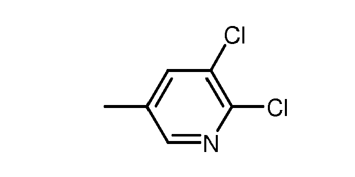

In einer weiteren hervorgehobenen Gruppe von Verbindungen der Formel (I-c) steht E für 5-Brom-6-chlor-pyrid-3-yl

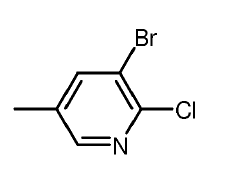

In einer weiteren hervorgehobenen Gruppe von Verbindungen der Formel (I-c) steht E für 5-Methyl-6-chlor-pyrid-3-yl

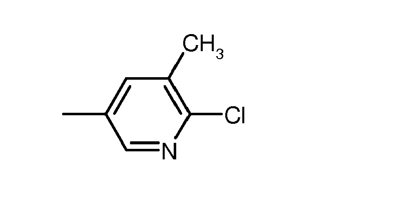

In einer weiteren hervorgehobenen Gruppe von Verbindungen der Formel (I-c) steht E für 5-Fluor-6-brom-pyrid-3-yl

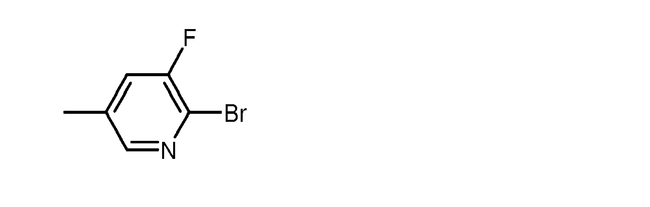

In einer weiteren hervorgehobenen Gruppe von Verbindungen der Formel (I-c) steht E für 5-Chlor-6-brom-pyrid-3-yl

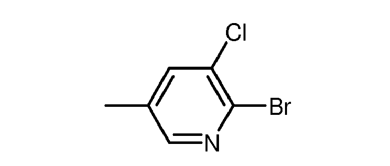

In einer weiteren hervorgehobenen Gruppe von Verbindungen der Formel (I-c) steht E für 5-Chlor-6-iod-pyrid-3-yl

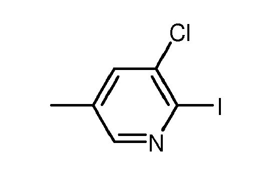

In einer weiteren hervorgehobenen Gruppe von Verbindungen der Formel (I-c) steht R⁴ für 2-Fluorethyl.

In einer weiteren hervorgehobenen Gruppe von Verbindungen der Formel (I-c) steht R⁴ für 2,2-Difluorethyl.

Eine bevorzugte Untergruppe der Verbindungen der Formel (I) sind solche der Formel (I-d) 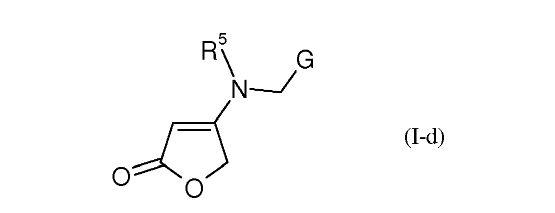 in welcher
- G: für Pyrid-2-yl oder Pyrid-4-yl steht oder für Pyrid-3-yl, welches gegebenenfalls in 6-Position substituiert ist durch Fluor, Chlor, Brom, Methyl, Trifluormethyl oder Trifluor-methoxy oder für Pyridazin-3-yl, welches gegebenenfalls in 6-Position substituiert ist durch Chlor oder Methyl oder für Pyrazin-3-yl oder für 2-Chlor-pyrazin-5-yl oder für 1,3-Thiazol-5-yl, welches gegebenenfalls in 2-Position substituiert ist durch Chlor oder Methyl, und
- R⁵: für C₁-C₄-Alkyl, Alkenyl, Alkinyl, Cycloalkyl oder Alkoxy steht.

Bevorzugte Substituenten bzw. Bereiche der in der oben und nachstehend erwähnten Formel (I-d) aufgeführten Reste werden im Folgenden erläutert.
- G: steht bevorzugt für 6-Fluor-pyrid-3-yl, 6-Chlor-pyrid-3-yl, 6-Brom-pyrid-3-yl, 6-Methyl-pyrid-3-yl, 6-Trifluormethyl-pyrid-3-yl, 6-Trifluormethoxypyrid-3-yl, 6-Chlor-1,4-pyridazin-3-yl, 6-Methyl-1,4-pyridazin-3-yl, 2-Chlor-1,3-thiazol-5-yl oder 2-Methyl-1,3-thiazol-5-yl.
- R⁵: steht bevorzugt für C₁-C₄-Alkyl, C₁-Alkoxy, C₂-C₄-Alkenyl, C₂-C₄-Alkinyl oder C₃-C₄-Cycloalkyl.
- G: steht besonders bevorzugt für den Rest 6-Fluor-pyrid-3-yl, 6-Chlor-pyrid-3-yl, 6-Brompyrid-3-yl, 6-Chlor-1,4-pyridazin-3-yl, 2-Chlor-1,3-thiazol-5-yl,
- R⁵: steht besonders bevorzugt für Methyl, Methoxy, Ethyl, Propyl, Vinyl, Allyl, Propargyl oder Cyclopropyl.
- G: steht ganz besonders bevorzugt für den Rest 6-Chlor-pyrid-3-yl.
- R⁵: steht ganz besonders bevorzugt für Methyl oder Cyclopropyl.

In einer hervorgehobenen Gruppe von Verbindungen der Formel (I-d) steht G für 6-Chlor-pyrid-3-yl

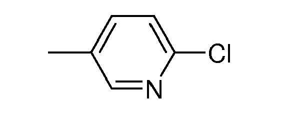

In einer weiteren hervorgehobenen Gruppe von Verbindungen der Formel (I-d) steht G für 6-Brom-pyrid-3-yl

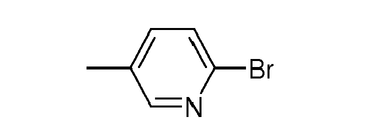

In einer weiteren hervorgehobenen Gruppe von Verbindungen der Formel (I-d) steht G für 6-Chlor-1,4-pyridazin-3-yl-

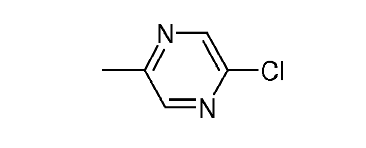

In einer weiteren hervorgehobenen Gruppe von Verbindungen der Formel (I-d) steht G für 2-Chlor-1,3-thiazol-5-yl-

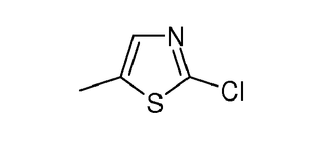

In einer weiteren hervorgehobenen Gruppe von Verbindungen der Formel (I-d) steht G für 6-Fluorpyrid-3-yl

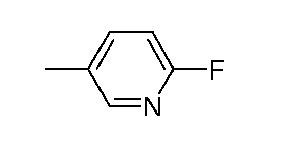

In einer weiteren hervorgehobenen Gruppe von Verbindungen der Formel (I-d) G für 6-Trifluormethyl-pyrid-3-yl-

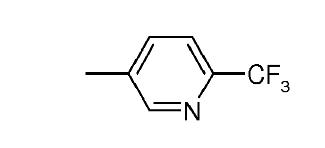

In einer weiteren hervorgehobenen Gruppe von Verbindungen der Formel (I-d) steht G für 6-Fluor-pyrid-3-yl

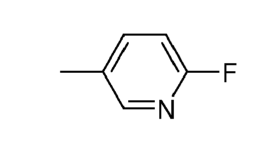

In einer weiteren hervorgehobenen Gruppe von Verbindungen der Formel (I-d) steht R⁵ für Methyl.

In einer weiteren hervorgehobenen Gruppe von Verbindungen der Formel (I-d) steht R⁵ für Cyclopropyl.

Im Einzelnen seien die folgenden besonders bevorzugten Verbindungen der allgemeinen Formel (I) genannt:
- Verbindung (I-1), 4-{[(6-Brompyrid-3-yl)methyl](2-fluorethyl)amino}furan-2(5H)-on, besitzt die Formel 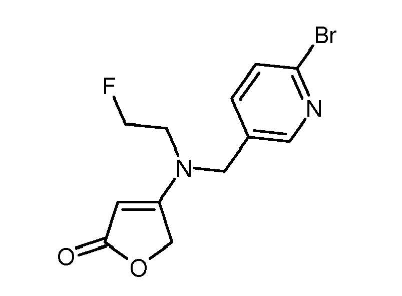 und ist bekannt aus der internationalen Patentanmeldung WO 2007/115644.
- Verbindung (1-2), 4-{[(6-Fluorpyrid-3-yl)methyl](2,2-difluorethyl)amino}furan-2(5H)-on, besitzt die Formel 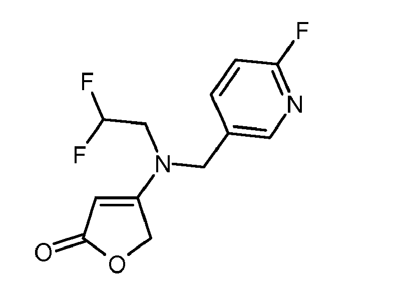 und ist bekannt aus der internationalen Patentanmeldung WO 2007/115644.
- Verbindung (1-3), 4-{[(2-Chlor-1,3-thiazol-5-yl)methyl](2-fluorethyl)amino}furan-2(5H)-on, besitzt die Formel 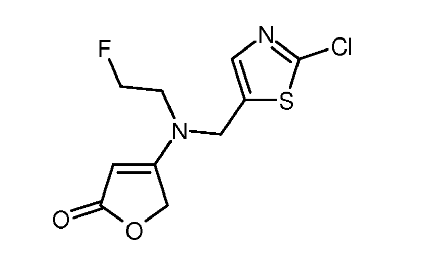 und ist bekannt aus der internationalen Patentanmeldung WO 2007/115644.
- Verbindung (I-4), 4-{[(6-Chlorpyrid-3-yl)methyl](2-fluorethyl)amino}furan-2(5H)-on, besitzt die Formel 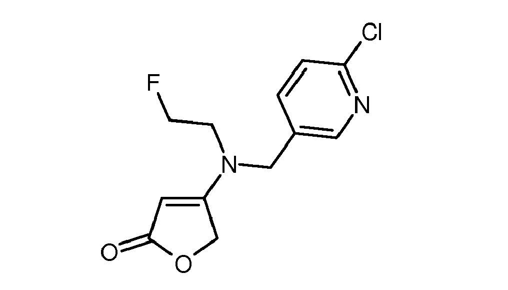 und ist bekannt aus der internationalen Patentanmeldung WO 2007/115644.
- Verbindung (1-5), 4-{[(6-Chlorpyrid-3-yl)methyl](2,2-difluorethyl)amino}furan-2(5H)-on, besitzt die Formel 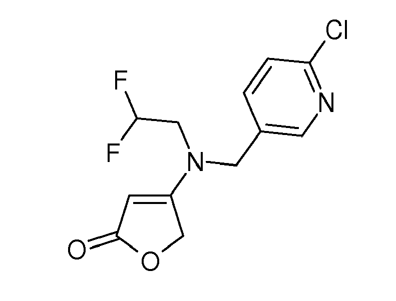 und ist bekannt aus der internationalen Patentanmeldung WO 2007/115644.
- Verbindung (1-6), 4-{[(6-Chlor-5-fluorpyrid-3-yl)methyl](methyl)amino}furan-2(5H)-on, besitzt die Formel 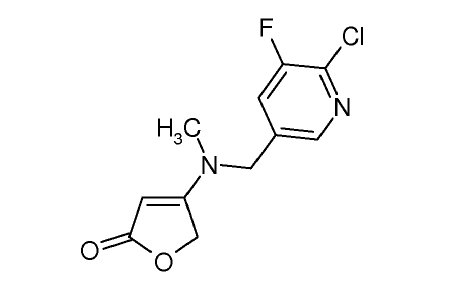 und ist bekannt aus der internationalen Patentanmeldung WO 2007/115643.
- Verbindung (1-7), 4-{[(5,6-Dichlorpyrid-3-yl)methyl](2-fluorethyl)amino}furan-2(5H)-on, besitzt die Formel 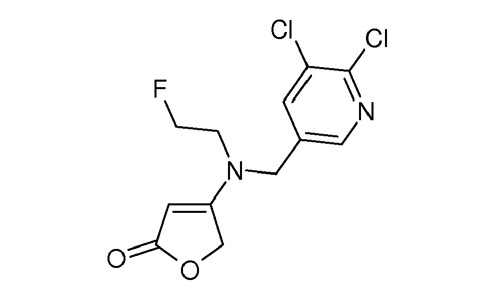 und ist bekannt aus der internationalen Patentanmeldung WO 2007/115646.
- Verbindung (I-8), 4-{[(6-Chlor-5-fluorpyrid-3-yl)methyl](cyclopropyl)amino}furan-2(5H)-on, besitzt die Formel 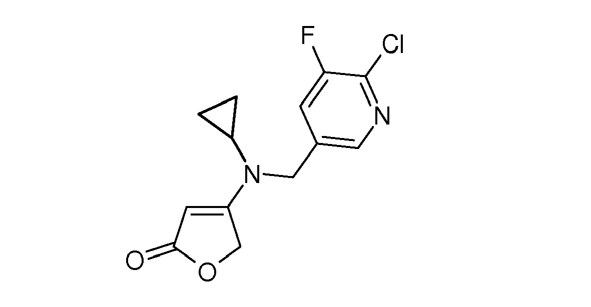 und ist bekannt aus der internationalen Patentanmeldung WO 2007/115643.
- Verbindung (I-9), 4-{[(6-Chlorpyrid-3-yl)methyl](cyclopropyl)amino}furan-2(5H)-on, besitzt die Formel 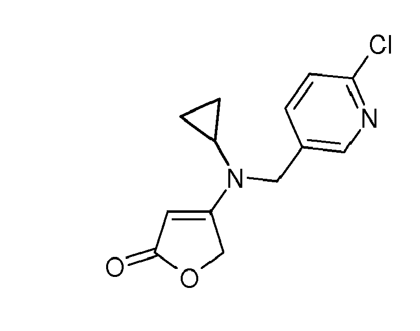 und ist bekannt aus EP 0 539 588.
- Verbindung (I-10), 4-{[(6-Chlorpyrid-3-yl)methyl](methyl)amino}furan-2(5H)-on, besitzt die Formel 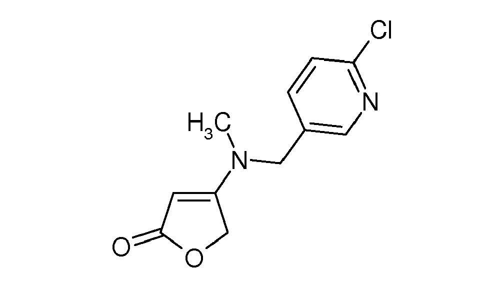 und ist bekannt aus EP 0 539 588.

Die Verbindungen der Formel (I) mit wenigstens einem basischen Zentrum sind dazu in der Lage, beispielsweise Säureadditionssalze zu bilden, z.B. mit starken anorganischen Säuren wie Mineralsäuren, z.B. Perchlorsäure, Schwefelsäure, Salpetersäure, salpetriger Säure, einer Phosphorsäure oder einer Halogenwasserstoffsäure, mit starken organischen Carbonsäuren wie unsubstituierten oder substituierten, z.B. halogensubstituierten, C₁-C₄-Alkancarbonsäuren, z.B. Essigsäure, gesättigten oder ungesättigten Dicarbonsäuren, z.B. Oxalsäure, Malonsäure, Bernsteinsäure, Maleinsäure, Fumarsäure und Phthalsäure, Hydroxycarbonsäuren, z.B. Ascorbinsäure, Milchsäure, Äpfelsäure, Weinsäure und Citronensäure, oder Benzoesäure, oder mit organischen Sulfonsäuren wie unsubstituierten oder substituierten, z.B. halogensubstituierten, C₁-C₄-Alkan- oder Arylsulfonsäuren, z.B. Methan- oder p-Toluolsulfonsäure. Die Verbindungen der Formel (I) mit wenigstens einer sauren Gruppe sind dazu in der Lage, zum Beispiel Salze mit Basen zu bilden, z.B. Metallsalze wie Alkali- oder Erdalkalisalze, z.B. Natrium-, Kalium- oder Magnesiumsalze, oder Salze mit Ammoniak oder einem organischen Amin wie Morpholin, Piperidin, Pyrrolidin, einem niederen Mono-, Di- oder Trialkylamin, z.B. Ethyl-, Diethyl-, Triethyl- oder Dimethylpropylamin, oder einem niederen Mono-, Di- oder Trihydroxyalkylamin, z.B. Mono-, Di- oder Triethanolamin. Darüber hinaus können gegebenenfalls entsprechende innere Salze gebildet werden. Im Rahmen der Erfindung sind agrochemisch vorteilhafte Salze bevorzugt. Angesichts der engen Beziehung zwischen den Verbindungen der Formel (I) in freier Form und in Form ihrer Salze sollte oben und im folgenden jeder Verweis auf die freien Verbindungen der Formel (I) oder auf ihre Salze so verstanden werden, dass auch die entsprechenden Salze bzw. die freien Verbindungen der Formel (I) eingeschlossen sind, wenn dies angebracht und zweckmäßig ist. Dies trifft entsprechend auch auf mögliche Tautomere der Verbindungen der Formel (I) und auf ihre Salze zu.

Die Enaminocarbonylverbindungen zur Bekämpfung von durch Vektoren (Insekten) übertragenen Virosen können auch weitere geeignete fungizid, akarizid oder insektizid wirksame Zumischkomponenten enthalten.

Besonders bevorzugte zur Bekämpfung von durch Vektoren (Insekten) übertragenen Virosen geeignete Wirkstoffkombinationen enthalten mindestens eine Verbindung ausgewählt aus der Gruppe der Verbindungen der Formel (1-1), (1-2), (1-3), (1-4), (1-5), (1-6), (1-7), (1-8), (1-9) und (1-10) und mindestens ein Insektizid ausgewählt aus der Gruppe bestehend aus den Verbindungen (2-1 bis 2-37). Damit erhält man die in den Tabelle 1 bis 10 aufgeführten Kombinationen, wobei jede Kombination für sich eine ganz besonders bevorzugte erfindungsgemäße Ausführungsform zur Bekämpfung von durch Vektoren (Insekten) übertragenen Virosen darstellt.

**Tabelle 1**

| **Mischung enthaltend** | | | |
|---|---|---|---|
| **Mischungs-nummer** | **Verbindung der Formel I** | | **Wirkstoff** |
| 1-1 | I-1 | und | (2-1) Thiacloprid |
| 1-2 | I-1 | und | (2-2) Dinotefuran |
| 1-3 | I-1 | und | (2-3) Acetamiprid |
| 1-4 | I-1 | und | (2-4) Nitenpyram |
| 1-5 | I-1 | und | (2-5) Imidacloprid |
| 1-6 | I-1 | und | (2-6) Imidaclothiz |
| 1-7 | I-1 | und | (2-7) AKD-1022 |
| 1-8 | I-1 | und | (2-8) Thiamethoxam |
| 1-9 | I-1 | und | (2-9) Clothianidin |
| 1-10 | I-1 | und | (2-10) Sulfoxaflor |
| 1-11 | I-1 | und | (2-11) Spinosad |
| 1-12 | I-1 | und | (2-12) Spinetoram |
| 1-13 | I-1 | und | (2-13) Abamectin |
| 1-14 | I-1 | und | (2-14) Emamectin-Benzoat |
| 1-15 | I-1 | und | (2-15) Milbemectin |
| 1-16 | I-1 | und | (2-16) Lepimectin |
| 1-17 | I-1 | und | (2-17) Fipronil |
| 1-18 | I-1 | und | (2-18) Ethiprole |
| 1-19 | I-1 | und | (2-19) Beta-cyfluthrin |
| 1-20 | I-1 | und | (2-20) Cypermethrin |
| 1-21 | I-1 | und | (2-21) Deltamethrin |
| 1-22 | I-1 | und | (2-22) Lambda-cyhalothrin |
| 1-23 | I-1 | und | (2-23) Cyfluthrin |
| 1-24 | I-1 | und | (2-24) Tefluthrin |
| 1-25 | I-1 | und | (2-25) Transfluthrin |
| 1-26 | I-1 | und | (2-26) Indoxacarb |
| 1-27 | I-1 | und | (2-27) Metaflumizone |
| 1-28 | I-1 | und | (2-28) Spirodiclofen |
| 1-29 | I-1 | und | (2-29) Spiromesifen |
| 1-30 | I-1 | und | (2-30) Spirotetramat |
| 1-31 | I-1 | und | (2-31) Flubendiamide |
| 1-32 | I-1 | und | (2-32) Rynaxapyr |
| 1-33 | I-1 | und | (2-33) Cyazypyr |
| 1-34 | I-1 | und | (2-34) Pyrifluquinazon |
| 1-35 | I-1 | und | (2-35) Flonicamid |
| 1-36 | I-1 | und | (2-36) Methiocarb |
| 1-37 | I-1 | und | (2-37) Thiodicarb |

**Tabelle 2**

| **Mischung enthaltend** | | | |
|---|---|---|---|
| **Mischungs-nummer** | **Verbindung der Formel I** | | **Wirkstoff** |
| 2-1 | I-2 | und | (2-1) Thiacloprid |
| 2-2 | 1-2 | und | (2-2) Dinotefuran |
| 2-3 | I-2 | und | (2-3) Acetamiprid |
| 2-4 | 1-2 | und | (2-4) Nitenpyram |
| 2-5 | I-2 | und | (2-5) Imidacloprid |
| 2-6 | I-2 | und | (2-6) Imidaclothiz |
| 2-7 | 1-2 | und | (2-7) AKD-1022 |
| 2-8 | 1-2 | und | (2-8) Thiamethoxam |
| 2-9 | 1-2 | und | (2-9) Clothianidin |
| 2-10 | I-2 | und | (2-10) Sulfoxaflor |
| 2-11 | I-2 | und | (2-11) Spinosad |
| 2-12 | 1-2 | und | (2-12) Spinetoram |
| 2-13 | 1-2 | und | (2-13) Abamectin |
| 2-14 | 1-2 | und | (2-14) Emamectin-Benzoat |
| 2-15 | 1-2 | und | (2-15) Milbemectin |
| 2-16 | 1-2 | und | (2-16) Lepimectin |
| 2-17 | 1-2 | und | (2-17) Fipronil |
| 2-18 | 1-2 | und | (2-18) Ethiprole |
| 2-19 | 1-2 | und | (2-19) Beta-cyfluthrin |
| 2-20 | 1-2 | und | (2-20) Cypermethrin |
| 2-21 | 1-2 | und | (2-21) Deltamethrin |
| 2-22 | 1-2 | und | (2-22) Lambda-cyhalothrin |
| 2-23 | 1-2 | und | (2-23) Cyfluthrin |
| 2-24 | 1-2 | und | (2-24) Tefluthrin |
| 2-25 | 1-2 | und | (2-25) Transfluthrin |
| 2-26 | 1-2 | und | (2-26) Indoxacarb |
| 2-27 | I-2 | und | (2-27) Metaflumizone |
| 2-28 | I-2 | und | (2-28) Spirodiclofen |
| 2-29 | 1-2 | und | (2-29) Spiromesifen |
| 2-30 | 1-2 | und | (2-30) Spirotetramat |
| 2-31 | I-2 | und | (2-31) Flubendiamide |
| 2-32 | 1-2 | und | (2-32) Rynaxapyr |
| 2-33 | 1-2 | und | (2-33) Cyazypyr |
| 2-34 | 1-2 | und | (2-34) Pyrifluquinazon |
| 2-35 | I-2 | und | (2-35) Flonicamid |
| 2-36 | 1-2 | und | (2-36) Methiocarb |
| 2-37 | 1-2 | und | (2-37) Thiodicarb |

**Tabelle 3**

| **Mischung enthaltend** | | | |
|---|---|---|---|
| **Mischungs-nummer** | **Verbindung der Formel I** | | **Wirkstoff** |
| 3-1 | I-3 | und | (2-1) Thiacloprid |
| 3-2 | 1-3 | und | (2-2) Dinotefuran |
| 3-3 | I-3 | und | (2-3) Acetamiprid |
| 3-4 | 1-3 | und | (2-4) Nitenpyram |
| 3-5 | I-3 | und | (2-5) Imidacloprid |
| 3-6 | I-3 | und | (2-6) Imidaclothiz |
| 3-7 | 1-3 | und | (2-7) AKD-1022 |
| 3-8 | 1-3 | und | (2-8) Thiamethoxam |
| 3-9 | 1-3 | und | (2-9) Clothianidin |
| 3-10 | I-3 | und | (2-10) Sulfoxaflor |
| 3-11 | I-3 | und | (2-11) Spinosad |
| 3-12 | 1-3 | und | (2-12) Spinetoram |
| 3-13 | 1-3 | und | (2-13) Abamectin |
| 3-14 | 1-3 | und | (2-14) Emamectin-Benzoat |
| 3-15 | 1-3 | und | (2-15) Milbemectin |
| 3-16 | 1-3 | und | (2-16) Lepimectin |
| 3-17 | 1-3 | und | (2-17) Fipronil |
| 3-18 | 1-3 | und | (2-18) Ethiprole |
| 3-19 | 1-3 | und | (2-19) Beta-cyfluthrin |
| 3-20 | 1-3 | und | (2-20) Cypermethrin |
| 3-21 | 1-3 | und | (2-21) Deltamethrin |
| 3-22 | 1-3 | und | (2-22) Lambda-cyhalothrin |
| 3-23 | 1-3 | und | (2-23) Cyfluthrin |
| 3-24 | 1-3 | und | (2-24) Tefluthrin |
| 3-25 | 1-3 | und | (2-25) Transfluthrin |
| 3-26 | 1-3 | und | (2-26) Indoxacarb |
| 3-27 | I-3 | und | (2-27) Metaflumizone |
| 3-28 | I-3 | und | (2-28) Spirodiclofen |
| 3-29 | 1-3 | und | (2-29) Spiromesifen |
| 3-30 | 1-3 | und | (2-30) Spirotetramat |
| 3-31 | I-3 | und | (2-31) Flubendiamide |
| 3-32 | 1-3 | und | (2-32) Rynaxapyr |
| 3-33 | 1-3 | und | (2-33) Cyazypyr |
| 3-34 | 1-3 | und | (2-34) Pyrifluquinazon |
| 3-35 | I-3 | und | (2-35) Flonicamid |
| 3-36 | 1-3 | und | (2-36) Methiocarb |
| 3-37 | 1-3 | und | (2-37) Thiodicarb |

**Tabelle 4**

| **Mischung enthaltend** | | | |
|---|---|---|---|
| **Mischungs-nummer** | **Verbindung der Formel I** | | **Wirkstoff** |
| 4-1 | I-4 | und | (2-1) Thiacloprid |
| 4-2 | 1-4 | und | (2-2) Dinotefuran |
| 4-3 | I-4 | und | (2-3) Acetamiprid |
| 4-4 | 1-4 | und | (2-4) Nitenpyram |
| 4-5 | I-4 | und | (2-5) Imidacloprid |
| 4-6 | I-4 | und | (2-6) Imidaclothiz |
| 4-7 | 1-4 | und | (2-7) AKD-1022 |
| 4-8 | 1-4 | und | (2-8) Thiamethoxam |
| 4-9 | 1-4 | und | (2-9) Clothianidin |
| 4-10 | I-4 | und | (2-10) Sulfoxaflor |
| 4-11 | I-4 | und | (2-11) Spinosad |
| 4-12 | 1-4 | und | (2-12) Spinetoram |
| 4-13 | 1-4 | und | (2-13) Abamectin |
| 4-14 | 1-4 | und | (2-14) Emamectin-Benzoat |
| 4-15 | 1-4 | und | (2-15) Milbemectin |
| 4-16 | 1-4 | und | (2-16) Lepimectin |
| 4-17 | 1-4 | und | (2-17) Fipronil |
| 4-18 | 1-4 | und | (2-18) Ethiprole |
| 4-19 | 1-4 | und | (2-19) Beta-cyfluthrin |
| 4-20 | 1-4 | und | (2-20) Cypermethrin |
| 4-21 | 1-4 | und | (2-21) Deltamethrin |
| 4-22 | 1-4 | und | (2-22) Lambda-cyhalothrin |
| 4-23 | 1-4 | und | (2-23) Cyfluthrin |
| 4-24 | 1-4 | und | (2-24) Tefluthrin |
| 4-25 | 1-4 | und | (2-25) Transfluthrin |
| 4-26 | 1-4 | und | (2-26) Indoxacarb |
| 4-27 | I-4 | und | (2-27) Metaflumizone |
| 4-28 | I-4 | und | (2-28) Spirodiclofen |
| 4-29 | 1-4 | und | (2-29) Spiromesifen |
| 4-30 | 1-4 | und | (2-30) Spirotetramat |
| 4-31 | I-4 | und | (2-31) Flubendiamide |
| 4-32 | 1-4 | und | (2-32) Rynaxapyr |
| 4-33 | 1-4 | und | (2-33) Cyazypyr |
| 4-34 | 1-4 | und | (2-34) Pyrifluquinazon |
| 4-35 | I-4 | und | (2-35) Flonicamid |
| 4-36 | I-4 | und | (2-36) Methiocarb |
| 4-37 | 1-4 | und | (2-37) Thiodicarb |

**Tabelle 5**

| **Mischung enthaltend** | | | |
|---|---|---|---|
| **Mischungs-nummer** | **Verbindung der Formel I** | | **Wirkstoff** |
| 5-1 | I-5 | und | (2-1) Thiacloprid |
| 5-2 | 1-5 | und | (2-2) Dinotefuran |
| 5-3 | I-5 | und | (2-3) Acetamiprid |
| 5-4 | 1-5 | und | (2-4) Nitenpyram |
| 5-5 | I-5 | und | (2-5) Imidacloprid |
| 5-6 | I-5 | und | (2-6) Imidaclothiz |
| 5-7 | 1-5 | und | (2-7) AKD-1022 |
| 5-8 | 1-5 | und | (2-8) Thiamethoxam |
| 5-9 | 1-5 | und | (2-9) Clothianidin |
| 5-10 | I-5 | und | (2-10) Sulfoxaflor |
| 5-11 | I-5 | und | (2-11) Spinosad |
| 5-12 | 1-5 | und | (2-12) Spinetoram |
| 5-13 | 1-5 | und | (2-13) Abamectin |
| 5-14 | 1-5 | und | (2-14) Emamectin-Benzoat |
| 5-15 | 1-5 | und | (2-15) Milbemectin |
| 5-16 | 1-5 | und | (2-16) Lepimectin |
| 5-17 | 1-5 | und | (2-17) Fipronil |
| 5-18 | 1-5 | und | (2-18) Ethiprole |
| 5-19 | 1-5 | und | (2-19) Beta-cyfluthrin |
| 5-20 | 1-5 | und | (2-20) Cypermethrin |
| 5-21 | 1-5 | und | (2-21) Deltamethrin |
| 5-22 | 1-5 | und | (2-22) Lambda-cyhalothrin |
| 5-23 | 1-5 | und | (2-23) Cyfluthrin |
| 5-24 | 1-5 | und | (2-24) Tefluthrin |
| 5-25 | 1-5 | und | (2-25) Transfluthrin |
| 5-26 | 1-5 | und | (2-26) Indoxacarb |
| 5-27 | I-5 | und | (2-27) Metaflumizone |
| 5-28 | I-5 | und | (2-28) Spirodiclofen |
| 5-29 | 1-5 | und | (2-29) Spiromesifen |
| 5-30 | 1-5 | und | (2-30) Spirotetramat |
| 5-31 | I-5 | und | (2-31) Flubendiamide |
| 5-32 | 1-5 | und | (2-32) Rynaxapyr |
| 5-33 | 1-5 | und | (2-33) Cyazypyr |
| 5-34 | 1-5 | und | (2-34) Pyrifluquinazon |
| 5-35 | I-5 | und | (2-35) Flonicamid |
| 5-36 | 1-5 | und | (2-36) Methiocarb |
| 5-37 | 1-5 | und | (2-37) Thiodicarb |

**Tabelle 6**

| **Mischung enthaltend** | | | |
|---|---|---|---|
| **Mischungs-nummer** | **Verbindung der Formel I** | | **Wirkstoff** |
| 6-1 | 1-6 | und | (2-1) Thiacloprid |
| 6-2 | 1-6 | und | (2-2) Dinotefuran |
| 6-3 | 1-6 | und | (2-3) Acetamiprid |
| 6-4 | 1-6 | und | (2-4) Nitenpyram |
| 6-5 | 1-6 | und | (2-5) Imidacloprid |
| 6-6 | 1-6 | und | (2-6) Imidaclothiz |
| 6-7 | 1-6 | und | (2-7) AKD-1022 |
| 6-8 | 1-6 | und | (2-8) Thiamethoxam |
| 6-9 | 1-6 | und | (2-9) Clothianidin |
| 6-10 | 1-6 | und | (2-10) Sulfoxaflor |
| 6-11 | 1-6 | und | (2-11) Spinosad |
| 6-12 | 1-6 | und | (2-12) Spinetoram |
| 6-13 | 1-6 | und | (2-13) Abamectin |
| 6-14 | 1-6 | und | (2-14) Emamectin-Benzoat |
| 6-15 | 1-6 | und | (2-15) Milbemectin |
| 6-16 | 1-6 | und | (2-16) Lepimectin |
| 6-17 | 1-6 | und | (2-17) Fipronil |
| 6-18 | 1-6 | und | (2-18) Ethiprole |
| 6-19 | 1-6 | und | (2-19) Beta-cyfluthrin |
| 6-20 | 1-6 | und | (2-20) Cypermethrin |
| 6-21 | 1-6 | und | (2-21) Deltamethrin |
| 6-22 | 1-6 | und | (2-22) Lambda-cyhalothrin |
| 6-23 | 1-6 | und | (2-23) Cyfluthrin |
| 6-24 | 1-6 | und | (2-24) Tefluthrin |
| 6-25 | 1-6 | und | (2-25) Transfluthrin |
| 6-26 | 1-6 | und | (2-26) Indoxacarb |
| 6-27 | 1-6 | und | (2-27) Metaflumizone |
| 6-28 | 1-6 | und | (2-28) Spirodiclofen |
| 6-29 | 1-6 | und | (2-29) Spiromesifen |
| 6-30 | 1-6 | und | (2-30) Spirotetramat |
| 6-31 | 1-6 | und | (2-31) Flubendiamide |
| 6-32 | 1-6 | und | (2-32) Rynaxapyr |
| 6-33 | 1-6 | und | (2-33) Cyazypyr |
| 6-34 | 1-6 | und | (2-34) Pyrifluquinazon |
| 6-35 | 1-6 | und | (2-35) Flonicamid |
| 6-36 | 1-6 | und | (2-36) Methiocarb |
| 6-37 | 1-6 | und | (2-37) Thiodicarb |

**Tabelle 7**

| **Mischung enthaltend** | | | |
|---|---|---|---|
| **Mischungs-nummer** | **Verbindung der Formel I** | | **Wirkstoff** |
| 7-1 | I-7 | und | (2-1) Thiacloprid |
| 7-2 | 1-7 | und | (2-2) Dinotefuran |
| 7-3 | I-7 | und | (2-3) Acetamiprid |
| 7-4 | 1-7 | und | (2-4) Nitenpyram |
| 7-5 | I-7 | und | (2-5) Imidacloprid |
| 7-6 | I-7 | und | (2-6) Imidaclothiz |
| 7-7 | 1-7 | und | (2-7) AKD-1022 |
| 7-8 | 1-7 | und | (2-8) Thiamethoxam |
| 7-9 | 1-7 | und | (2-9) Clothianidin |
| 7-10 | I-7 | und | (2-10) Sulfoxaflor |
| 7-11 | I-7 | und | (2-11) Spinosad |
| 7-12 | 1-7 | und | (2-12) Spinetoram |
| 7-13 | 1-7 | und | (2-13) Abamectin |
| 7-14 | 1-7 | und | (2-14) Emamectin-Benzoat |
| 7-15 | 1-7 | und | (2-15) Milbemectin |
| 7-16 | 1-7 | und | (2-16) Lepimectin |
| 7-17 | 1-7 | und | (2-17) Fipronil |
| 7-18 | 1-7 | und | (2-18) Ethiprole |
| 7-19 | 1-7 | und | (2-19) Beta-cyfluthrin |
| 7-20 | 1-7 | und | (2-20) Cypermethrin |
| 7-21 | 1-7 | und | (2-21) Deltamethrin |
| 7-22 | 1-7 | und | (2-22) Lambda-cyhalothrin |
| 7-23 | 1-7 | und | (2-23) Cyfluthrin |
| 7-24 | 1-7 | und | (2-24) Tefluthrin |
| 7-25 | 1-7 | und | (2-25) Transfluthrin |
| 7-26 | 1-7 | und | (2-26) Indoxacarb |
| 7-27 | I-7 | und | (2-27) Metaflumizone |
| 7-28 | I-7 | und | (2-28) Spirodiclofen |
| 7-29 | 1-7 | und | (2-29) Spiromesifen |
| 7-30 | 1-7 | und | (2-30) Spirotetramat |
| 7-31 | I-7 | und | (2-31) Flubendiamide |
| 7-32 | 1-7 | und | (2-32) Rynaxapyr |
| 7-33 | 1-7 | und | (2-33) Cyazypyr |
| 7-34 | 1-7 | und | (2-34) Pyrifluquinazon |
| 7-35 | I-7 | und | (2-35) Flonicamid |
| 7-36 | 1-7 | und | (2-36) Methiocarb |
| 7-37 | 1-7 | und | (2-37) Thiodicarb |

**Tabelle 8**

| **Mischung enthaltend** | | | |
|---|---|---|---|
| **Mischungs-nummer** | **Verbindung der Formel I** | | **Wirkstoff** |
| 8-1 | I-8 | und | (2-1) Thiacloprid |
| 8-2 | 1-8 | und | (2-2) Dinotefuran |
| 8-3 | I-8 | und | (2-3) Acetamiprid |
| 8-4 | 1-8 | und | (2-4) Nitenpyram |
| 8-5 | 1-8 | und | (2-5) Imidacloprid |
| 8-6 | 1-8 | und | (2-6) Imidaclothiz |
| 8-7 | 1-8 | und | (2-7) AKD-1022 |
| 8-8 | 1-8 | und | (2-8) Thiamethoxam |
| 8-9 | 1-8 | und | (2-9) Clothianidin |
| 8-10 | I-8 | und | (2-10) Sulfoxaflor |
| 8-11 | I-8 | und | (2-11) Spinosad |
| 8-12 | 1-8 | und | (2-12) Spinetoram |
| 8-13 | 1-8 | und | (2-13) Abamectin |
| 8-14 | 1-8 | und | (2-14) Emamectin-Benzoat |
| 8-15 | 1-8 | und | (2-15) Milbemectin |
| 8-16 | 1-8 | und | (2-16) Lepimectin |
| 8-17 | 1-8 | und | (2-17) Fipronil |
| 8-18 | 1-8 | und | (2-18) Ethiprole |
| 8-19 | 1-8 | und | (2-19) Beta-cyfluthrin |
| 8-20 | 1-8 | und | (2-20) Cypermethrin |
| 8-21 | 1-8 | und | (2-21) Deltamethrin |
| 8-22 | 1-8 | und | (2-22) Lambda-cyhalothrin |
| 8-23 | 1-8 | und | (2-23) Cyfluthrin |
| 8-24 | 1-8 | und | (2-24) Tefluthrin |
| 8-25 | 1-8 | und | (2-25) Transfluthrin |
| 8-26 | 1-8 | und | (2-26) Indoxacarb |
| 8-27 | I-8 | und | (2-27) Metaflumizone |
| 8-28 | I-8 | und | (2-28) Spirodiclofen |
| 8-29 | 1-8 | und | (2-29) Spiromesifen |
| 8-30 | 1-8 | und | (2-30) Spirotetramat |
| 8-31 | I-8 | und | (2-31) Flubendiamide |
| 8-32 | 1-8 | und | (2-32) Rynaxapyr |
| 8-33 | 1-8 | und | (2-33) Cyazypyr |
| 8-34 | 1-8 | und | (2-34) Pyrifluquinazon |
| 8-35 | I-8 | und | (2-35) Flonicamid |
| 8-36 | 1-8 | und | (2-36) Methiocarb |
| 8-37 | 1-8 | und | (2-37) Thiodicarb |

**Tabelle 9**

| **Mischung enthaltend** | | | |
|---|---|---|---|
| **Mischungs-nummer** | **Verbindung der Formel I** | | **Wirkstoff** |
| 9-1 | I-9 | und | (2-1) Thiacloprid |
| 9-2 | 1-9 | und | (2-2) Dinotefuran |
| 9-3 | I-9 | und | (2-3) Acetamiprid |
| 9-4 | 1-9 | und | (2-4) Nitenpyram |
| 9-5 | I-9 | und | (2-5) Imidacloprid |
| 9-6 | I-9 | und | (2-6) Imidaclothiz |
| 9-7 | 1-9 | und | (2-7) AKD-1022 |
| 9-8 | 1-9 | und | (2-8) Thiamethoxam |
| 9-9 | 1-9 | und | (2-9) Clothianidin |
| 9-10 | I-9 | und | (2-10) Sulfoxaflor |
| 9-11 | I-9 | und | (2-11) Spinosad |
| 9-12 | 1-9 | und | (2-12) Spinetoram |
| 9-13 | 1-9 | und | (2-13) Abamectin |
| 9-14 | 1-9 | und | (2-14) Emamectin-Benzoat |
| 9-15 | 1-9 | und | (2-15) Milbemectin |
| 9-16 | 1-9 | und | (2-16) Lepimectin |
| 9-17 | 1-9 | und | (2-17) Fipronil |
| 9-18 | 1-9 | und | (2-18) Ethiprole |
| 9-19 | 1-9 | und | (2-19) Beta-cyfluthrin |
| 9-20 | 1-9 | und | (2-20) Cypermethrin |
| 9-21 | 1-9 | und | (2-21) Deltamethrin |
| 9-22 | 1-9 | und | (2-22) Lambda-cyhalothrin |
| 9-23 | 1-9 | und | (2-23) Cyfluthrin |
| 9-24 | 1-9 | und | (2-24) Tefluthrin |
| 9-25 | 1-9 | und | (2-25) Transfluthrin |
| 9-26 | 1-9 | und | (2-26) Indoxacarb |
| 9-27 | I-9 | und | (2-27) Metaflumizone |
| 9-28 | I-9 | und | (2-28) Spirodiclofen |
| 9-29 | 1-9 | und | (2-29) Spiromesifen |
| 9-30 | 1-9 | und | (2-30) Spirotetramat |
| 9-31 | I-9 | und | (2-31) Flubendiamide |
| 9-32 | 1-9 | und | (2-32) Rynaxapyr |
| 9-33 | 1-9 | und | (2-33) Cyazypyr |
| 9-34 | 1-9 | und | (2-34) Pyrifluquinazon |
| 9-35 | I-9 | und | (2-35) Flonicamid |
| 9-36 | 1-9 | und | (2-36) Methiocarb |
| 9-37 | 1-9 | und | (2-37) Thiodicarb |

**Tabelle 10**

| **Mischung enthaltend** | | | |
|---|---|---|---|
| **Mischungs-nummer** | **Verbindung der Formel I** | | **Wirkstoff** |
| 10-1 | I-10 | und | (2-1) Thiacloprid |
| 10-2 | I-10 | und | (2-2) Dinotefuran |
| 10-3 | I-10 | und | (2-3) Acetamiprid |
| 10-4 | I-10 | und | (2-4) Nitenpyram |
| 10-5 | I-10 | und | (2-5) Imidacloprid |
| 10-6 | I-10 | und | (2-6) Imidaclothiz |
| 10-7 | I-10 | und | (2-7) AKD-1022 |
| 10-8 | I-10 | und | (2-8) Thiamethoxam |
| 10-9 | I-10 | und | (2-9) Clothianidin |
| 10-10 | I-10 | und | (2-10) Sulfoxaflor |
| 10-11 | I-10 | und | (2-11) Spinosad |
| 10-12 | I-10 | und | (2-12) Spinetoram |
| 10-13 | I-10 | und | (2-13) Abamectin |
| 10-14 | I-10 | und | (2-14) Emamectin-Benzoat |
| 10-15 | I-10 | und | (2-15) Milbemectin |
| 10-16 | I-10 | und | (2-16) Lepimectin |
| 10-17 | I-10 | und | (2-17) Fipronil |
| 10-18 | I-10 | und | (2-18) Ethiprole |
| 10-19 | I-10 | und | (2-19) Beta-cyfluthrin |
| 10-20 | I-10 | und | (2-20) Cypermethrin |
| 10-21 | I-10 | und | (2-21) Deltamethrin |
| 10-22 | I-10 | und | (2-22) Lambda-cyhalothrin |
| 10-23 | I-10 | und | (2-23) Cyfluthrin |
| 10-24 | I-10 | und | (2-24) Tefluthrin |
| 10-25 | I-10 | und | (2-25) Transfluthrin |
| 10-26 | I-10 | und | (2-26) Indoxacarb |
| 10-27 | I-10 | und | (2-27) Metaflumizone |
| 10-28 | I-10 | und | (2-28) Spirodiclofen |
| 10-29 | I-10 | und | (2-29) Spiromesifen |
| 10-30 | I-10 | und | (2-30) Spirotetramat |
| 10-31 | I-10 | und | (2-31) Flubendiamide |
| 10-32 | I-10 | und | (2-32) Rynaxapyr |
| 10-33 | I-10 | und | (2-33) Cyazypyr |
| 10-34 | I-10 | und | (2-34) Pyrifluquinazon |
| 10-35 | I-10 | und | (2-35) Flonicamid |
| 10-36 | I-10 | und | (2-36) Methiocarb |
| 10-37 | I-10 | und | (2-37) Thiodicarb |

Ein weiterer Gegenstand der vorliegenden Erfindung ist die Verwendung von Verbindungen der Formel (I) oder von den in den Tabellen 1 bis 10 aufgeführten Wirkstoffkombinationen zur Bekämpfung von durch Insekten übertragenen Virosen, wobei die übertragenden Insekten gegenüber einer oder mehreren Insektizidklassen resistent sind. Gemäß einem bevorzugten weiteren Gegenstand der vorliegenden Erfindung sind die Virosen übertragenden Insekten gegenüber Organophosphaten, Carbamaten, Organochlorverbindungen, Pyrethroide und/oder Neonikotinoiden resistent.

Die Verbindungen der Formel (I) sind bekannte Verbindungen, deren Herstellung in den Patentanmeldungen, die auf Seite 1 zitiert sind, beschrieben sind (siehe vor allem EP 0 539 588 A, WO 2006/037475 A, WO 2007/115643, WO 2007/115644 und WO 2007/115646).

Die nur allgemein beschriebenen zu schützenden Kulturen sind im Folgenden differenziert und näher spezifiziert. So versteht man hinsichtlich der Anwendung unter Gemüse z.B. Fruchtgemüse und Blütenstände als Gemüse, beispielsweise Paprika, Peperoni, Tomaten, Auberginen, Gurken, Kürbisse, Zucchini, Ackerbohnen, Stangenbohnen, Buschbohnen, Erbsen, Artischocken;
aber auch Blattgemüse, beispielsweise Kopfsalat, Chicoreé, Endivien, Kressen, Rauken, Feldsalat, Eisbergsalat, Lauch, Spinat, Mangold;
weiterhin Knollen-, Wurzel- und Stengelgemüse, beispielsweise Sellerie, Rote Beete, Möhren, Radieschen, Meerrettich, Schwarzwurzeln, Spargel, Speiserüben, Palmsprossen, Bambussprossen, außerdem Zwiebelgemüse, beispielsweise Zwiebeln, Lauch, Fenchel, Knoblauch;
ferner Kohlgemüse, wie Blumenkohl, Broccoli, Kohlrabi, Rotkohl, Weißkohl, Grünkohl, Wirsing, Rosenkohl, Chinakohl.
Hinsichtlich der Anwendung versteht man unter mehrjährigen Kulturen Zitrus, wie beispielsweise Orangen, Grapefruits, Mandarinen, Zitronen, Limetten, Bitterorangen, Kumquats, Satsumas;
aber auch Kernobst, wie beispielsweise Äpfel, Birnen und Quitten und Steinobst, wie beispielsweise Pfirsiche, Nektarinen, Kirschen, Pflaumen, Zwetschgen, Aprikosen;
weiterhin Wein, Hopfen, Oliven, Tee und tropische Kulturen, wie beispielsweise Mangos, Papayas, Feigen, Ananas, Datteln, Bananen, Durians (Stinkfrüchte), Kakis, Kokosnüsse, Kakao, Kaffee, Avocados, Litschies, Maracujas, Guaven,
außerdem Mandeln und Nüsse wie beispielsweise Haselnüsse, Walnüsse, Pistazien, Cashewnüsse, Paranüsse, Pekannüsse, Butternüsse, Kastanien, Hickorynüsse, Macadamiannüsse, Erdnüsse,
darüber hinaus auch Beerenfrüchte wie beispielsweise Johannisbeeren, Stachelbeeren, Himbeeren, Brombeeren, Heidelbeeren, Erdbeeren, Preiselbeeren, Kiwis, Cranberries.

Hinsichtlich der Anwendung versteht man unter Zierpflanzen ein- und mehrjährige Pflanzen, z.B. Schnittblumen wie beispielsweise Rosen, Nelken, Gerbera, Lilien, Margeriten, Chrysanthemen, Tulpen, Narzissen, Anemonen, Mohn, Amarillis, Dahlien, Azaleen, Malven,
aber auch z.B. Beetpflanzen, Topfpflanzen und Stauden, wie beispielsweise Rosen, Tagetes, Stiefmütterchen, Geranien, Fuchsien, Hibiscus, Chrysanthemen, Fleißige Lieschen, Alpenveilchen, Usambaraveilchen, Sonnenblumen, Begonien,
ferner z.B. Sträucher und Koniferen wie beispielsweise Ficus, Rhododendron, Fichten, Tannen, Kiefern, Eiben, Wacholder, Pinien, Oleander.

Hinsichtlich der Anwendung versteht man unter Gewürzen ein- und mehrjährige Pflanzen wie beispielsweise Anis, Chilli, Paprika, Pfeffer, Vanille, Majoran, Thymian, Gewürznelken, Wacholderbeeren, Zimt, Estragon, Koryander, Safran, Ingwer.

Bei der Verwendung von Enaminocarbonylverbindungen zur Bekämpfung von durch Vektoren (Insekten) übertragenen Virosen können die Aufwandmengen der Wirkstoffe der Formel (I) je nach Applikationsart innerhalb eines größeren Bereiches variiert werden. Die Aufwandmenge der Wirkstoffe der Formel (I) beträgt bei der Behandlung von Pflanzenteilen, z.B. Blättern von 0,1 bis 10.000 g/ha, bevorzugt von 1 bis 1.000 g/ha, besonders bevorzugt von 10 bis 300g/ha (bei Anwendung durch Gießen oder Tropfen kann die Aufwandmenge sogar verringert werden, vor allem wenn inerte Substrate wie Steinwolle oder Perlit verwendet werden).

Diese Aufwandmengen seien nur beispielhaft und nicht limitierend im Sinne der Erfindung genannt.

Die erfindungsgemäßen Enaminocarbonylverbindungen zur Bekämpfung von durch Vektoren (Insekten) übertragenen Virosen können eingesetzt werden, um Pflanzen innerhalb eines gewissen Zeitraumes nach der Behandlung gegen den Befall durch die genannten tierischen Schädlinge zu schützen. Der Zeitraum, innerhalb dessen Schutz herbeigeführt wird, erstreckt sich im Allgemeinen auf 1 bis 28 Tage, bevorzugt auf 1 bis 14 Tage, besonders bevorzugt auf 1 bis 10 Tage, ganz besonders bevorzugt auf 1 bis 7 Tage nach der Behandlung der Pflanzen mit den Enaminocarbonylverbindungen.

Die erfindungsgemäßen Enaminocarbonylverbindungen zur Bekämpfung von durch Vektoren (Insekten) übertragenen Virosen eignen sich bei guter Pflanzenverträglichkeit, günstiger Warmblütertoxizität und guter Umweltverträglichkeit zum Schutz von Pflanzen und Pflanzenorganen, zur Steigerung der Ernteerträge, Verbesserung der Qualität des Erntegutes und zur Bekämpfung von tierischen Schädlingen, insbesondere Insekten, Spinnentieren, Helminthen, Nematoden und Mollusken, die in der Landwirtschaft, im Gartenbau, bei der Tierzucht, in Forsten, in Gärten und Freizeiteinrichtungen, im Vorrats- und Materialschutz sowie auf dem Hygienesektor vorkommen. Sie können vorzugsweise als Pflanzenschutzmittel eingesetzt werden. Sie sind gegen normal sensible und resistente Arten sowie gegen alle oder einzelne Entwicklungsstadien wirksam. Zu den oben erwähnten Schädlingen gehören:

Aus der Ordnung der Anoplura (Phthiraptera) z.B. Damalinia spp., Haematopinus spp., Linognathus spp., Pediculus spp., Trichodectes spp.

Aus der Klasse der Arachnida z.B. Acarus siro, Aceria sheldoni, Aculops spp., Aculus spp., Amblyomma spp., Argas spp., Boophilus spp., Brevipalpus spp., Bryobia praetiosa, Chorioptes spp., Dermanyssus gallinae, Eotetranychus spp., Epitrimerus pyri, Eutetranychus spp., Eriophyes spp., Hemitarsonemus spp., Hyalomma spp., Ixodes spp., Latrodectus mactans, Metatetranychus spp., Oligonychus spp., Ornithodoros spp., Panonychus spp., Phyllocoptruta oleivora, Polyphagotarsonemus latus, Psoroptes spp., Rhipicephalus spp., Rhizoglyphus spp., Sarcoptes spp., Scorpio maurus, Stenotarsonemus spp., Tarsonemus spp., Tetranychus spp., Vasates lycopersici.

Aus der Klasse der Bivalva z.B. Dreissena spp.

Aus der Ordnung der Chilopoda z.B. Geophilus spp., Scutigera spp.

Aus der Ordnung der Coleoptera z.B. Acanthoscelides obtectus, Adoretus spp., Agelastica alni, Agriotes spp., Amphimallon solstitialis, Anobium punctatum, Anoplophora spp., Anthonomus spp., Anthrenus spp., Apogonia spp., Atomaria spp., Attagenus spp., Bruchidius obtectus, Bruchus spp., Ceuthorhynchus spp., Cleonus mendicus, Conoderus spp., Cosmopolites spp., Costelytra zealandica, Curculio spp., Cryptorhynchus lapathi, Dermestes spp., Diabrotica spp., Epilachna spp., Faustinus cubae, Gibbium psylloides, Heteronychus arator, Hylamorpha elegans, Hylotrupes bajulus, Hypera postica, Hypothenemus spp., Lachnosterna consanguinea, Leptinotarsa decemlineata, Lissorhoptrus oryzophilus, Lixus spp., Lyctus spp., Meligethes aeneus, Melolontha melolontha, Migdolus spp., Monochamus spp., Naupactus xanthographus, Niptus hololeucus, Oryctes rhinoceros, Oryzaephilus surinamensis, Otiorrhynchus sulcatus, Oxycetonia jucunda, Phaedon cochleariae, Phyllophaga spp., Popillia japonica, Premnotrypes spp., Psylliodes chrysocephala, Ptinus spp., Rhizobius ventralis, Rhizopertha dominica, Sitophilus spp., Sphenophorus spp., Sternechus spp., Symphyletes spp., Tenebrio molitor, Tribolium spp., Trogoderma spp., Tychius spp., Xylotrechus spp., Zabrus spp.

Aus der Ordnung der Collembola z.B. Onychiurus armatus.

Aus der Ordnung der Dermaptera z.B. Forficula auricularia.

Aus der Ordnung der Diplopoda z.B. Blaniulus guttulatus.

Aus der Ordnung der Diptera z.B. Aedes spp., Anopheles spp., Bibio hortulanus, Calliphora e-rythrocephala, Ceratitis capitata, Chrysomyia spp., Cochliomyia spp., Cordylobia anthropophaga, Culex spp., Cuterebra spp., Dacus oleae, Dermatobia hominis, Drosophila spp., Fannia spp., Gastrophilus spp., Hylemyia spp., Hyppobosca spp., Hypoderma spp., Liriomyza spp.. Lucilia spp., Musca spp., Nezara spp., Oestrus spp., Oscinella frit, Pegomyia hyoscyami, Phorbia spp., Stomoxys spp., Tabanus spp., Tannia spp., Tipula paludosa, Wohlfahrtia spp.

Aus der Klasse der Gastropoda z.B. Arion spp., Biomphalaria spp., Bulinus spp., Deroceras spp., Galba spp., Lymnaea spp., Oncomelania spp., Succinea spp.

Aus der Klasse der Helminthen z.B. Ancylostoma duodenale, Ancylostoma ceylanicum, Acylostoma braziliensis, Ancylostoma spp., Ascaris lubricoides, Ascaris spp., Brugia malayi, Brugia timori, Bunostomum spp., Chabertia spp., Clonorchis spp., Cooperia spp., Dicrocoelium spp, Dictyocaulus filaria, Diphyllobothrium latum, Dracunculus medinensis, Echinococcus granulosus, Echinococcus multilocularis, Enterobius vermicularis, Faciola spp., Haemonchus spp., Heterakis spp., Hymenolepis nana, Hyostrongulus spp., Loa Loa, Nematodirus spp., Oesophagostomum spp., Opisthorchis spp., Onchocerca volvulus, Ostertagia spp., Paragonimus spp., Schistosomen spp, Strongyloides fuelleborni, Strongyloides stercoralis, Stronyloides spp., Taenia saginata, Taenia solium, Trichinella spiralis, Trichinella nativa, Trichinella britovi, Trichinella nelsoni, Trichinella pseudopsiralis, Trichostrongulus spp., Trichuris trichuria, Wuchereria bancrofti.

Weiterhin lassen sich Protozoen, wie Eimeria, bekämpfen.

Aus der Ordnung der Heteroptera z.B. Anasa tristis, Antestiopsis spp., Blissus spp., Calocoris spp., Campylomma livida, Cavelerius spp., Cimex spp., Creontiades dilutus, Dasynus piperis, Dichelops furcatus, Diconocoris hewetti, Dysdercus spp., Euschistus spp., Eurygaster spp., Heliopeltis spp., Horcias nobilellus, Leptocorisa spp., Leptoglossus phyllopus, Lygus spp., Macropes excavatus, Miridae, Nezara spp., Oebalus spp., Pentomidae, Piesma quadrata, Piezodorus spp., Psallus seriatus, Pseudacysta persea, Rhodnius spp., Sahlbergella singularis, Scotinophora spp., Stephanitis nashi, Tibraca spp., Triatoma spp.

Aus der Ordnung der Homoptera z.B. Acyrthosipon spp., Aeneolamia spp., Agonoscena spp., A-leurodes spp., Aleurolobus barodensis, Aleurothrixus spp., Amrasca spp., Anuraphis cardui, Aonidiella spp., Aphanostigma piri, Aphis spp., Arboridia apicalis, Aspidiella spp., Aspidiotus spp., Atanus spp., Aulacorthum solani, Bemisia spp., Brachycaudus helichrysii, Brachycolus spp., Brevicoryne brassicae, Calligypona marginata, Carneocephala fulgida, Ceratovacuna lanigera, Cercopidae, Ceroplastes spp., Chaetosiphon fragaefolii, Chionaspis tegalensis, Chlorita onukii, Chromaphis juglandicola, Chrysomphalus ficus, Cicadulina mbila, Coccomytilus halli, Coccus spp., Cryptomyzus ribis, Dalbulus spp., Dialeurodes spp., Diaphorina spp., Diaspis spp., Doralis spp., Drosicha spp., Dysaphis spp., Dysmicoccus spp., Empoasca spp., Eriosoma spp., Erythroneura spp., Euscelis bilobatus, Geococcus coffeae, Homalodisca coagulata, Hyalopterus arundinis, Icerya spp., Idiocerus spp., Idioscopus spp., Laodelphax striatellus, Lecanium spp., Lepidosaphes spp., Lipaphis erysimi, Macrosiphum spp., Mahanarva fimbriolata, Melanaphis sacchari, Metcalfiella spp., Metopolophium dirhodum, Monellia costalis, Monelliopsis pecanis, Myzus spp., Nasonovia ribisnigri, Nephotettix spp., Nilaparvata lugens, Oncometopia spp., Orthezia praelonga, Parabemisia myricae, Paratrioza spp., Parlatoria spp., Pemphigus spp., Peregrinus maidis, Phenacoccus spp., Phloeomyzus passerinii, Phorodon humuli, Phylloxera spp., Pinnaspis aspidistrae, Planococcus spp., Protopulvinaria pyriformis, Pseudaulacaspis pentagona, Pseudococcus spp., Psylla spp., Pteromalus spp., Pyrilla spp., Quadraspidiotus spp., Quesada gigas, Rastrococcus spp., Rhopalosiphum spp., Saissetia spp., Scaphoides titanus, Schizaphis graminum, Selenaspidus articulatus, Sogata spp., Sogatella furcifera, Sogatodes spp., Stictocephala festina, Tenalaphara malayensis, Tinocallis caryaefoliae, Tomaspis spp., Toxoptera spp., Trialeurodes vaporariorum, Trioza spp., Typhlocyba spp., Unaspis spp., Viteus vitifolii.

Aus der Ordnung der Hymenoptera z.B. Diprion spp., Hoplocampa spp., Lasius spp., Monomorium pharaonis, Vespa spp.

Aus der Ordnung der Isopoda z.B. Armadillidium vulgare, Oniscus asellus, Porcellio scaber.

Aus der Ordnung der Isoptera z.B. Reticulitermes spp., Odontotermes spp.

Aus der Ordnung der Lepidoptera z.B. Acronicta major, Aedia leucomelas, Agrotis spp., Alabama argillacea, Anticarsia spp., Barathra brassicae, Bucculatrix thurberiella, Bupalus piniarius, Cacoecia podana, Capua reticulana, Carpocapsa pomonella, Cheimatobia brumata, Chilo spp., Choristoneura fumiferana, Clysia ambiguella, Cnaphalocerus spp., Earias insulana, Ephestia kuehniella, Euproctis chrysorrhoea, Euxoa spp., Feltia spp., Galleria mellonella, Helicoverpa spp., Heliothis spp., Hofmannophila pseudospretella, Homona magnanima, Hyponomeuta padella, Laphygma spp., Lithocolletis blancardella, Lithophane antennata, Loxagrotis albicosta, Lymantria spp., Malacosoma neustria, Mamestra brassicae, Mocis repanda, Mythimna separata, Oria spp., Oulema oryzae, Panolis flammea, Pectinophora gossypiella, Phyllocnistis citrella, Pieris spp., Plutella xylostella, Prodenia spp., Pseudaletia spp., Pseudoplusia includens, Pyrausta nubilalis, Spodoptera spp., Thermesia gemmatalis, Tinea pellionella, Tineola bisselliella, Tortrix viridana, Trichoplusia spp.

Aus der Ordnung der Orthoptera z.B. Acheta domesticus, Blatta orientalis, Blattella germanica, Gryllotalpa spp., Leucophaea maderae, Locusta spp., Melanoplus spp., Periplaneta americana, Schistocerca gregaria.

Aus der Ordnung der Siphonaptera z.B. Ceratophyllus spp., Xenopsylla cheopis.

Aus der Ordnung der Symphyla z.B. Scutigerella immaculata.

Aus der Ordnung der Thysanoptera z.B. Baliothrips biformis, Enneothrips flavens, Frankliniella spp., Heliothrips spp., Hercinothrips femoralis, Kakothrips spp., Rhipiphorothrips cruentatus, Scirtothrips spp., Taeniothrips cardamoni, Thrips spp.

Aus der Ordnung der Thysanura z.B. Lepisma saccharina.

Zu den pflanzenparasitären Nematoden gehören z.B. Anguina spp., Aphelenchoides spp., Belonoaimus spp., Bursaphelenchus spp., Ditylenchus dipsaci, Globodera spp., Heliocotylenchus spp., Heterodera spp., Longidorus spp., Meloidogyne spp., Pratylenchus spp., Radopholus similis, Rotylenchus spp., Trichodorus spp., Tylenchorhynchus spp., Tylenchulus spp., Tylenchulus semipenetrans, Xiphinema spp.

Die erfindungsgemäßen Enaminocarbonylverbindungen zur Bekämpfung von durch Vektoren (Insekten) übertragenen Virosen können gegebenenfalls in bestimmten Konzentrationen bzw. Aufwandmengen auch als Herbizide, Safener, Wachstumsregulatoren oder Mittel zur Verbesserung der Pflanzeneigenschaften, oder als Mikrobizide, beispielsweise als Fungizide, Antimykotika, Bakterizide, Virizide (einschließlich Mittel gegen Viroide) oder als Mittel gegen MLO (Mycoplasmalike-organism) und RLO (Rickettsia-like-organism) verwendet werden.

Die Wirkstoffe der Formel (I) können in die üblichen Formulierungen überführt werden, wie Lösungen, Emulsionen, Spritzpulver, wasser- und ölbasierte Suspensionen, Pulver, Stäubemittel, Pasten, lösliche Pulver, lösliche Granulate, Streugranulate, Suspensions-Emulsions-Konzentrate, Wirkstoff-imprägnierte Naturstoffe, Wirkstoff-imprägnierte synthetische Stoffe, Düngemittel sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln. Die Herstellung der Formulierungen erfolgt entweder in geeigneten Anlagen oder auch vor oder während der Anwendung.

Als Hilfsstoffe können solche Stoffe Verwendung finden, die geeignet sind, dem Mittel selbst oder und/oder davon abgeleitete Zubereitungen (z.B. Spritzbrühen, Saatgutbeizen) besondere Eigenschaften zu verleihen, wie bestimmte technische Eigenschaften und/oder auch besondere biologische Eigenschaften. Als typische Hilfsmittel kommen in Frage: Streckmittel, Lösemittel und Trägerstoffe.

Als Streckmittel eignen sich z.B. Wasser, polare und unpolare organische chemische Flüssigkeiten z.B. aus den Klassen der aromatischen und nicht-aromatischen Kohlenwasserstoffe (wie Paraffine, Alkylbenzole, Alkylnaphthaline, Chlorbenzole), der Alkohole und Polyole (die ggf. auch substituiert, verethert und/oder verestert sein können), der Ketone (wie Aceton, Cyclohexanon), Ester (auch Fette und Öle) und (poly-)Ether, der einfachen und substituierten Amine, Amide, Lactame (wie *N*-Alkylpyrrolidone) und Lactone, der Sulfone und Sulfoxide (wie Dimethylsulfoxid).

Im Falle der Benutzung von Wasser als Streckmittel können z.B. auch organische Lösemittel als Hilfslösungsmittel verwendet werden. Als flüssige Lösemittel kommen im wesentlichen in Frage: Aromaten, wie Xylol, Toluol, oder Alkylnaphthaline, chlorierte aromatische Kohlenwasserstoffe und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylsulfoxid, sowie Wasser.

Erfindungsgemäß bedeutet Trägerstoff eine natürliche oder synthetische, organische oder anorganische Substanz, welcher fest oder flüssig sein kann, mit welchen die Wirkstoffe zur besseren Anwendbarkeit, insbesondere zum Aufbringen auf Pflanzen oder Pflanzenteile oder Saatgut, gemischt oder verbunden sind. Der feste oder flüssige Trägerstoff ist im Allgemeinen inert und sollte in der Landwirtschaft verwendbar sein.

Als feste oder flüssige Trägerstoffe kommen in Frage:
z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Papier, Sägemehl, Kokosnussschalen, Maiskolben und Tabakstängeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage nicht-ionische und/oder ionische Stoffe, z.B. aus den Klassen der Alkohol-POE- und/oder POP-Ether, Säure- und/oder POP- POE-Ester, Alkyl-Aryl- und/oder POP- POE-Ether, Fett- und/oder POP- POE-Addukte, POE- und/oder POP-Polyol Derivate, POE- und/oder POP-Sorbitan- oder Zucker-Addukte, Alky- oder Aryl-Sulfate, Sulfonate und Phosphate oder die entsprechenden PO-Ether-Addukte. Ferner geeignete Oligo- oder Polymere, z.B. ausgehend von vinylischen Monomeren, von Acrylsäure, aus EO und/oder PO allein oder in Verbindung mit z.B. (poly-) Alkoholen oder (poly-) Aminen. Ferner können Einsatz finden Lignin und seine Sulfonsäure-Derivate, einfache und modifizierte Cellulosen, aromatische und/oder aliphatische Sulfonsäuren sowie deren Addukte mit Formaldehyd.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Weitere Additive können Duftstoffe, mineralische oder vegetabile gegebenenfalls modifizierte Öle, Wachse und Nährstoffe (auch Spurennährstoffe), wie Salze von Eisen, Mangan, Bor, Kupfer, Kobalt, Molybdän und Zink sein.

Weiterhin enthalten sein können Stabilisatoren wie Kältestabilisatoren, Konservierungsmittel, Oxidationsschutzmittel, Lichtschutzmittel oder andere die chemische und/oder physikalische Stabilität verbessernde Mittel.

Der Wirkstoffgehalt der aus den handelsüblichen Formulierungen bereiteten Anwendungsformen kann in weiten Bereichen variieren. Die Gesamtwirkstoffkonzentration oder die Wirkstoffkonzentartion der Einzelwirkstoffe der Anwendungsformen liegt im Bereich von 0,00000001 bis 97 Gew.-% Wirkstoff, vorzugsweise im Bereich von 0,0000001 bis 97 Gew.-%, besonders bevorzugt im Bereich von 0,000001 bis 83 Gew.-% oder 0,000001 bis 5 Gew.-% und ganz besonders bevorzugt im Bereich von 0,0001 bis 1 Gew. %.

Die erfindungsgemäßen Enaminocarbonylverbindungen zur Bekämpfung von durch Vektoren (Insekten) übertragenen Virosen können in ihren handelsüblichen Formulierungen sowie in den aus diesen Formulierungen bereiteten Anwendungsformen in Mischung mit weiteren Wirkstoffen wie Insektiziden, Lockstoffen, Sterilantien, Bakteriziden, Akariziden, Nematiziden, Fungiziden, wachstumsregulierenden Stoffen, Herbiziden, Safenern, Düngemitteln oder Semiochemicals vorliegen.

Auch eine Mischung mit anderen bekannten Wirkstoffen, wie Herbiziden, Düngemitteln, Wachstumsregulatoren, Safenern, Semiochemicals, oder auch mit Mitteln zur Verbesserung der Pflanzeneigenschaften ist möglich.

Die erfindungsgemäßen Enaminocarbonylverbindungen zur Bekämpfung von durch Vektoren (Insekten) übertragenen Virosen können ferner beim Einsatz als Insektizide in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne dass der zugesetzte Synergist selbst aktiv wirksam sein muss.

Die erfindungsgemäßen Enaminocarbonylverbindungen zur Bekämpfung von durch Vektoren (Insekten) übertragenen Virosen können ferner beim Einsatz als Insektizide in ihren handelsüblichen Formulierungen sowie in den aus diesen Formulierungen bereiteten Anwendungsformen in Mischungen mit Hemmstoffen vorliegen, die einen Abbau des Wirkstoffes nach Anwendung in der Umgebung der Pflanze, auf der Oberfläche von Pflanzenteilen oder in pflanzlichen Geweben vermindern.

Die Anwendung geschieht in einer den Anwendungsformen angepassten üblichen Weise.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Sproß, Blatt, Blüte und Wurzel verstanden werden, wobei beispielhaft Blätter, Nadeln, Stengel, Stämme, Blüten, Fruchtkörper, Früchte und Saatgut sowie Wurzeln, Knollen und Rhizome aufgeführt werden. Zu den Pflanzenteilen gehört auch Erntegut sowie vegetatives und generatives Vermehrungsmaterial, beispielsweise Früchte, Samen, Stecklinge, Knollen, Rhizome, Ableger, Saatgut, Brutzwiebeln, Absenker und Ausläufer.

Die erfindungsgemäße Behandlung der Pflanzen und Pflanzenteile mit den Enaminocarbonylverbindungen zur Bekämpfung von durch Vektoren (Insekten) übertragenen Virosen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen, Injizieren und bei Vermehrungsmaterial, insbesondere bei Saatgut, weiterhin durch ein- oder mehrschichtiges Umhüllen.

Insbesondere eignen sich die erfindungsgemäßen Enaminocarbonylverbindungen zur Bekämpfung von durch Vektoren (Insekten) übertragenen Virosen zur Behandlung von Saatgut. So entsteht ein großer Teil des durch Schädlinge verursachten Schadens an Kulturpflanzen bereits durch den Befall des Saatguts während der Lagerung und nach dem Einbringen des Saatguts in den Boden sowie während und unmittelbar nach der Keimung der Pflanzen. Diese Phase ist besonders kritisch, da die Wurzeln und Sprosse der wachsenden Pflanze besonders empfindlich sind und bereits ein geringer Schaden zum Absterben der ganzen Pflanze führen kann. Es besteht daher ein insbesondere großes Interesse daran, das Saatgut und die keimende Pflanze durch den Einsatz geeigneter Mittel zu schützen.

Die Bekämpfung von Schädlingen durch die Behandlung des Saatguts von Pflanzen ist seit langem bekannt und ist Gegenstand ständiger Verbesserungen. Dennoch ergeben sich bei der Behandlung von Saatgut eine Reihe von Problemen, die nicht immer zufrieden stellend gelöst werden können. So ist es erstrebenswert, Verfahren zum Schutz des Saatguts und der keimenden Pflanze zu entwickeln, die das zusätzliche Ausbringen von Pflanzenschutzmitteln nach der Saat oder nach dem Auflaufen der Pflanzen überflüssig machen. Es ist weiterhin erstrebenswert, die Menge des eingesetzten Wirkstoffs dahingehend zu optimieren, dass das Saatgut und die keimende Pflanze vor dem Befall durch Schädlinge bestmöglich geschützt werden, ohne jedoch die Pflanze selbst durch den eingesetzten Wirkstoff zu schädigen. Insbesondere sollten Verfahren zur Behandlung von Saatgut auch die intrinsischen insektiziden Eigenschaften transgener Pflanzen einbeziehen, um einen optimalen Schutz des Saatguts und auch der keimenden Pflanze bei einem minimalen Aufwand an Pflanzenschutzmitteln zu erreichen.

Einer der Vorteile der vorliegenden Erfindung ist es, dass aufgrund der besonderen systemischen Eigenschaften einiger der Wirkstoffe die Behandlung des Saatguts mit diesen Wirkstoffen nicht nur das Saatgut selbst, sondern auch die daraus hervorgehenden Pflanzen nach dem Auflaufen vor Schädlingen schützt. Auf diese Weise kann die unmittelbare Behandlung der Kultur zum Zeitpunkt der Aussaat oder kurz danach entfallen.

Ebenso ist es als vorteilhaft anzusehen, dass die erfindungsgemäßen Enaminocarbonylverbindungen zur Bekämpfung von durch Vektoren (Insekten) übertragenen Virosen insbesondere auch bei transgenem Saatgut eingesetzt werden können, wobei die aus diesem Saatgut hervorgehenden Pflanzen zur Expression eines gegen Schädlinge gerichteten Proteins befähigt sind. Durch die Behandlung solchen Saatguts mit den erfindungsgemäßen Enaminocarbonylverbindungen zur Bekämpfung von durch Vektoren (Insekten) übertragenen Virosen können bestimmte Schädlinge bereits durch die Expression des z.B. insektiziden Proteins kontrolliert werden, und zusätzlich durch die erfindungsgemäßen Enaminocarbonylverbindungen zur Bekämpfung von durch Vektoren (Insekten) übertragenen Virosen vor Schäden bewahrt werden.

Die erfindungsgemäßen Enaminocarbonylverbindungen zur Bekämpfung von durch Vektoren (Insekten) übertragenen Virosen eignen sich zum Schutz von Saatgut jeglicher Pflanzensorte wie bereits vorstehend genannt, die in der Landwirtschaft, im Gewächshaus, in Forsten oder im Gartenbau eingesetzt wird. Insbesondere handelt es sich dabei um Saatgut von Mais, Erdnuss, Canola, Raps, Mohn, Soja, Baumwolle, Rübe (z.B. Zuckerrübe und Futterrübe), Reis, Hirse, Weizen, Gerste, Hafer, Roggen, Sonnenblume, Tabak, Kartoffeln oder Gemüse (z.B. Tomaten, Kohlgewächs). Die erfindungsgemäßen Enaminocarbonylverbindungen zur Bekämpfung von durch Vektoren (Insekten) übertragenen Virosen eignen sich ebenfalls zur Behandlung des Saatguts von Obstpflanzen und Gemüse wie vorstehend bereits genannt. Besondere Bedeutung kommt der Behandlung des Saatguts von Mais, Soja, Baumwolle, Weizen und Canola oder Raps zu.

Wie vorstehend bereits erwähnt, kommt auch der Behandlung von transgenem Saatgut mit einer erfindungsgemäßen Enaminocarbonylverbindung zur Bekämpfung von durch Vektoren (Insekten) übertragenen Virosen eine besondere Bedeutung zu. Dabei handelt es sich um das Saatgut von Pflanzen, die in der Regel zumindest ein heterologes Gen enthalten, das die Expression eines Polypeptids mit insbesondere insektiziden Eigenschaften steuert. Die heterologen Gene in transgenem Saatgut können dabei aus Mikroorganismen wie Bacillus, Rhizobium, Pseudomonas, Serratia, Trichoderma, Clavibacter, Glomus oder Gliocladium stammen. Die vorliegende Erfindung eignet sich besonders für die Behandlung von transgenem Saatgut, das zumindest ein heterologes Gen enthält, das aus Bacillus sp. stammt und dessen Genprodukt Wirksamkeit gegen Maiszünsler und/oder Maiswurzel-Bohrer zeigt. Besonders bevorzugt handelt es sich dabei um ein heterologes Gen, das aus Bacillus thuringiensis stammt.

Im Rahmen der vorliegenden Erfindung wird der Wirkstoff der Formel (I) alleine oder in einer geeigneten Formulierung auf das Saatgut aufgebracht. Vorzugsweise wird das Saatgut in einem Zustand behandelt, in dem es so stabil ist, dass keine Schäden bei der Behandlung auftreten. Im Allgemeinen kann die Behandlung des Saatguts zu jedem Zeitpunkt zwischen der Ernte und der Aussaat erfolgen. Üblicherweise wird Saatgut verwendet, das von der Pflanze getrennt und von Kolben, Schalen, Stängeln, Hülle, Wolle oder Fruchtfleisch befreit wurde.

Gegenstand der vorliegenden Erfindung ist auch die Verwendung von Enaminocarbonylverbindungen allein oder von Wirkstoffkombinationen, die die bekannten Enaminocarbonylverbindungen einerseits und weitere bekannte insektizide Wirkstoffe andererseits enthalten zur Bekämpfung von durch Vektoren (Insekten) übertragenen Virosen, wobei das Saatgut der vor durch Insekten übertragenen Virosen zu schützenden Pflanzen mit den Enaminocarbonylverbindungen allein oder mit den genannten Wirkstoffkombinationen behandelt werden. Bevorzugte Wirkstoffkombinationen zur Behandlung von Saatgut enthalten mindestens eine Verbindung der Formel (I-1), (I-2), (I-3), (1-4), (I-5), (I-6), (I-7), (I-8), (I-9) oder (I-10) und mindestens einen bekannten insektiziden Wirkstoff (2-1) bis (2-37).

Im Allgemeinen muss bei der Behandlung des Saatguts darauf geachtet werden, dass die Menge des auf das Saatgut aufgebrachten Wirkstoffs der Formel (I) und/oder weiterer Zusatzstoffe so gewählt wird, dass die Keimung des Saatguts nicht beeinträchtigt bzw. die daraus hervorgehende Pflanze nicht geschädigt wird. Dies ist vor allem bei Wirkstoffen zu beachten, die in bestimmten Aufwandmengen phytotoxische Effekte zeigen können.

Der Wirkstoff der Formel (I) kann unmittelbar aufgebracht werden, also ohne weitere Komponenten zu enthalten und ohne verdünnt worden zu sein. In der Regel ist es vorzuziehen, den Wirkstoff in Form einer geeigneten Formulierung auf das Saatgut aufzubringen. Geeignete Formulierungen und Verfahren für die Saatgutbehandlung sind dem Fachmann bekannt und werden z.B. in den folgenden Dokumenten beschrieben: US 4,272,417 A, US 4,245,432 A, US 4,808,430 A, US 5,876,739 A, US 2003/0176428 A1, WO 2002/080675 A1, WO 2002/028186 A2.

Die erfindungsgemäß verwendbaren Wirkstoffe können in die üblichen Beizmittel-Formulierungen überführt werden, wie Lösungen, Emulsionen, Suspensionen, Pulver, Schäume, Slurries oder andere Hüllmassen für Saatgut, sowie ULV-Formulierungen.

Diese Formulierungen werden in bekannter Weise hergestellt, indem man die Wirkstoffe mit üblichen Zusatzstoffen vermischt, wie zum Beispiel übliche Streckmittel sowie Lösungs- oder Verdünnungsmittel, Farbstoffe, Netzmittel, Dispergiermittel, Emulgatoren, Entschäumer, Konservierungsmittel, sekundäre Verdickungsmittel, Kleber, Gibberelline und auch Wasser.

Als Farbstoffe, die in den erfindungsgemäß verwendbaren Beizmittel-Formulierungen enthalten sein können, kommen alle für derartige Zwecke üblichen Farbstoffe in Betracht. Dabei sind sowohl in Wasser wenig lösliche Pigmente als auch in Wasser lösliche Farbstoffe verwendbar. Als Beispiele genannt seien die unter den Bezeichnungen Rhodamin B, C.I. Pigment Red 112 und C.I. Solvent Red 1 bekannten Farbstoffe.

Als Netzmittel, die in den erfindungsgemäß verwendbaren Beizmittel-Formulierungen enthalten sein können, kommen alle zur Formulierung von agrochemischen Wirkstoffen üblichen, die Benetzung fördernden Stoffe in Frage. Vorzugsweise verwendbar sind Alkylnaphthalin-Sulfonate, wie Diisopropyl- oder Diisobutylnaphthalin-Sulfonate.

Als Dispergiermittel und/oder Emulgatoren, die in den erfindungsgemäß verwendbaren Beizmittel-Formulierungen enthalten sein können, kommen alle zur Formulierung von agrochemischen Wirkstoffen üblichen nichtionischen, anionischen und kationischen Dispergiermittel in Betracht. Vorzugsweise verwendbar sind nichtionische oder anionische Dispergiermittel oder Gemische von nichtionischen oder anionischen Dispergiermitteln. Als geeignete nichtionische Dispergiermittel sind insbesondere Ethylenoxid-Propylenoxid Blockpolymere, Alkylphenolpolyglykolether sowie Tristryrylphenolpolyglykolether und deren phosphatierte oder sulfatierte Derivate zu nennen. Geeignete anionische Dispergiermittel sind insbesondere Ligninsulfonate, Polyacrylsäuresalze und Arylsulfonat-Formaldehydkondensate.

Als Entschäumer können in den erfindungsgemäß verwendbaren Beizmittel-Formulierungen alle zur Formulierung von agrochemischen Wirkstoffen üblichen schaumhemmenden Stoffe enthalten sein. Vorzugsweise verwendbar sind Silikonentschäumer und Magnesiumstearat.

Als Konservierungsmittel können in den erfindungsgemäß verwendbaren Beizmittel-Formulierungen alle für derartige Zwecke in agrochemischen Mitteln einsetzbaren Stoffe vorhanden sein. Beispielhaft genannt seien Dichlorophen und Benzylalkoholhemiformal.

Als sekundäre Verdickungsmittel, die in den erfindungsgemäß verwendbaren Beizmittel-Formulierungen enthalten sein können, kommen alle für derartige Zwecke in agrochemischen Mitteln einsetzbaren Stoffe in Frage. Vorzugsweise in Betracht kommen Cellulosederivate, Acrylsäurederivate, Xanthan, modifizierte Tone und hochdisperse Kieselsäure.

Als Kleber, die in den erfindungsgemäß verwendbaren Beizmittel-Formulierungen enthalten sein können, kommen alle üblichen in Beizmitteln einsetzbaren Bindemittel in Frage. Vorzugsweise genannt seien Polyvinylpyrrolidon, Polyvinylacetat, Polyvinylalkohol und Tylose.

Als Gibberelline, die in den erfindungsgemäß verwendbaren Beizmittel-Formulierungen enthalten sein können, kommen vorzugsweise die Gibberelline A1, A3 (= Gibberellinsäure), A4 und A7 infrage, besonders bevorzugt verwendet man die Gibberellinsäure. Die Gibberelline sind bekannt (vgl. R. Wegler "Chemie der Pflanzenschutz- und Schädlingsbekämpfungsmittel", Bd. 2, Springer Verlag, 1970, S. 401-412).

Die erfindungsgemäß verwendbaren Beizmittel-Formulierungen können entweder direkt oder nach vorherigem Verdünnen mit Wasser zur Behandlung von Saatgut der verschiedensten Art, auch von Saatgut transgener Pflanzen, eingesetzt werden. Dabei können im Zusammenwirken mit den durch Expression gebildeten Substanzen auch zusätzliche synergistische Effekte auftreten.

Zur Behandlung von Saatgut mit den erfindungsgemäß verwendbaren Beizmittel-Formulierungen oder den daraus durch Zugabe von Wasser hergestellten Zubereitungen kommen alle üblicherweise für die Beizung einsetzbaren Mischgeräte in Betracht. Im einzelnen geht man bei der Beizung so vor, dass man das Saatgut in einen Mischer gibt, die jeweils gewünschte Menge an Beizmittel-Formulierungen entweder als solche oder nach vorherigem Verdünnen mit Wasser hinzufügt und bis zur gleichmäßigen Verteilung der Formulierung auf dem Saatgut mischt. Gegebenenfalls schließt sich ein Trocknungsvorgang an. Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden, wie beispielsweise Antisense- oder Cosuppressions-Technologie, RNA-Interferenz - RNAi - Technologie, gegebenenfalls in Kombination mit konventionellen Methoden erhalten wurden (Genetically Modified Organisms) und deren Teile behandelt. Die Begriffe "Teile" bzw. "Teile von Pflanzen" oder "Pflanzenteile" wurden oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder mit Hilfe rekombinanter DNA-Techniken, gezüchtet worden sind. Kulturpflanzen können demnach Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten.

Das erfindungsgemäße Behandlungsverfahren kann somit auch für die Behandlung von genetisch modifizierten Organismen (GMOs), z. B. Pflanzen oder Samen, verwendet werden. Genetisch modifizierte Pflanzen (oder transgene Pflanzen) sind Pflanzen, bei denen ein heterologes Gen stabil in das Genom integriert worden ist. Der Begriff "heterologes Gen" bedeutet im wesentlichen ein Gen, das außerhalb der Pflanze bereitgestellt oder assembliert wird und das bei Einführung in das Zellkerngenom, das Chloroplastengenom oder das Mitochondriengenom der transformierten Pflanze dadurch neue oder verbesserte agronomische oder sonstige Eigenschaften verleiht, dass es ein interessierendes Protein oder Polypeptid exprimiert oder dass es ein anderes Gen, das in der Pflanze vorliegt bzw. andere Gene, die in der Pflanze vorliegen, herunterreguliert oder abschaltet (zum Beispiel mittels Antisense-Technologie, Co-suppressionstechnologie oder RNAi-Technologie [RNA Interference]). Ein heterologes Gen, das im Genom vorliegt, wird ebenfalls als Transgen bezeichnet. Ein Transgen, das durch sein spezifisches Vorliegen im Pflanzengenom definiert ist, wird als Transformations- bzw. transgenes Event bezeichnet.

In Abhängigkeit von den Pflanzenarten oder Pflanzensorten, ihrem Standort und ihren Wachstumsbedingungen (Böden, Klima, Vegetationsperiode, Ernährung) kann die erfindungsgemäße Behandlung auch zu überadditiven ("synergistischen") Effekten führen. So sind zum Beispiel die folgenden Effekte möglich, die über die eigentlich zu erwartenden Effekte hinausgehen: verringerte Aufwandmengen und/oder erweitertes Wirkungsspektrum und/oder erhöhte Wirksamkeit der Wirkstoffe und Zusammensetzungen, die erfindungsgemäß eingesetzt werden können, besseres Pflanzenwachstum, erhöhte Toleranz gegenüber hohen oder niedrigen Temperaturen, erhöhte Toleranz gegenüber Trockenheit oder Wasser- oder Bodensalzgehalt, erhöhte Blühleistung, Ernteerleichterung, Reifebeschleunigung, höhere Erträge, größere Früchte, größere Pflanzenhöhe, intensiver grüne Farbe des Blatts, frühere Blüte, höhere Qualität und/oder höherer Nährwert der Ernteprodukte, höhere Zuckerkonzentration in den Früchten, bessere Lagerfähigkeit und/oder Verarbeitbarkeit der Ernteprodukte.

In gewissen Aufwandmengen können die erfindungsgemäßen Enaminocarbonylverbindungen zur Bekämpfung von durch Vektoren (Insekten) übertragenen Virosen auch eine stärkende Wirkung auf Pflanzen ausüben. Sie eignen sich daher für die Mobilisierung des pflanzlichen Abwehrsystems gegen Angriff durch unerwünschte phytopathogene Pilze und/oder Mikroorganismen und/oder Viren. Dies kann gegebenenfalls einer der Gründe für die erhöhte Wirksamkeit der erfindungsgemäßen Kombinationen sein, zum Beispiel gegen Pilze. Pflanzenstärkende (resistenzinduzierende) Substanzen sollen im vorliegenden Zusammenhang auch solche Substanzen oder Substanzkombinationen bedeuten, die fähig sind, das pflanzliche Abwehrsystem so zu stimulieren, dass die behandelten Pflanzen, wenn sie im Anschluss daran mit unerwünschten phytopathogenen Pilzen und/oder Mikroorganismen und/oder Viren inokkuliert werde, einen beträchtlichen Resistenzgrad gegen diese unerwünschten phytopathogenen Pilze und/oder Mikroorganismen und/oder Viren aufweisen. Im vorliegenden Fall versteht man unter unerwünschten phytopathogenen Pilzen und/oder Mikroorganismen und/oder Viren phytopathogene Pilze, Bakterien und Viren. Die erfindungsgemäßen Substanzen lassen sich daher zum Schutz von Pflanzen gegen Angriff durch die erwähnten Pathogene innerhalb eines gewissen Zeitraums nach der Behandlung einsetzen. Der Zeitraum, über den eine Schutzwirkung erzielt wird, erstreckt sich im Allgemeinen von 1 bis 10 Tagen, vorzugsweise 1 bis 7 Tagen, nach der Behandlung der Pflanzen mit den Enaminocarbonylverbindungen.

Zu Pflanzen und Pflanzensorten, die vorzugsweise erfindungsgemäß behandelt werden, zählen alle Pflanzen, die über Erbgut verfügen, das diesen Pflanzen besonders vorteilhafte, nützliche Merkmale verleiht (unabhängig davon, ob dies durch Züchtung und/oder Biotechnologie erzielt wurde).

Pflanzen und Pflanzensorten, die ebenfalls vorzugsweise erfindungsgemäß behandelt werden, sind gegen einen oder mehrere biotische Stressfaktoren resistent, d. h. diese Pflanzen weisen eine verbesserte Abwehr gegen tierische und mikrobielle Schädlinge wie Nematoden, Insekten, Milben, phytopathogene Pilze, Bakterien, Viren und/oder Viroide auf.

Pflanzen und Pflanzensorten, die ebenfalls erfindungsgemäß behandelt werden können, sind solche Pflanzen, die gegen einen oder mehrere abiotische Stressfaktoren resistent sind. Zu den abiotischen Stressbedingungen können zum Beispiel Dürre, Kälte- und Hitzebedingungen, osmotischer Stress, Staunässe, erhöhter Bodensalzgehalt, erhöhtes Ausgesetztsein an Mineralien, Ozonbedingungen, Starklichtbedingungen, beschränkte Verfügbarkeit von Stickstoffnährstoffen, beschränkte Verfügbarkeit von Phosphornährstoffen oder Vermeidung von Schatten zählen.

Pflanzen und Pflanzensorten, die ebenfalls erfindungsgemäß behandelt werden können, sind solche Pflanzen, die durch erhöhte Ertragseigenschaften gekennzeichnet sind. Ein erhöhter Ertrag kann bei diesen Pflanzen z. B. auf verbesserter Pflanzenphysiologie, verbessertem Pflanzenwuchs und verbesserter Pflanzenentwicklung, wie Wasserverwertungseffizienz, Wasserhalteeffizienz, verbesserter Stickstoffverwertung, erhöhter Kohlenstoffassimilation, verbesserter Photosynthese, verstärkter Keimkraft und beschleunigter Abreife beruhen. Der Ertrag kann weiterhin durch eine verbesserte Pflanzenarchitektur (unter Stress- und nicht-Stress-Bedingungen) beeinflusst werden, darunter frühe Blüte, Kontrolle der Blüte für die Produktion von Hybridsaatgut, Keimpflanzenwüchsigkeit, Pflanzengröße, Internodienzahl und -abstand, Wurzelwachstum, Samengröße, Fruchtgröße, Schotengröße, Schoten- oder Ährenzahl, Anzahl der Samen pro Schote oder Ähre, Samenmasse, verstärkte Samenfüllung, verringerter Samenausfall, verringertes Schotenplatzen sowie Standfestigkeit. Zu weiteren Ertragsmerkmalen zählen Samenzusammensetzung wie Kohlenhydratgehalt, Proteingehalt, Ölgehalt und Ölzusammensetzung, Nährwert, Verringerung der nährwidrigen Verbindungen, verbesserte Verarbeitbarkeit und verbesserte Lagerfähigkeit.

Pflanzen, die erfindungsgemäß behandelt werden können, sind Hybridpflanzen, die bereits die Eigenschaften der Heterosis bzw. des Hybrideffekts exprimieren, was im allgemeinen zu höherem Ertrag, höherer Wüchsigkeit, besserer Gesundheit und besserer Resistenz gegen biotische und abiotische Stressfaktoren führt. Solche Pflanzen werden typischerweise dadurch erzeugt, dass man eine ingezüchtete pollensterile Elternlinie (den weiblichen Kreuzungspartner) mit einer anderen ingezüchteten pollenfertilen Elternlinie (dem männlichen Kreuzungspartner) kreuzt. Das Hybridsaatgut wird typischerweise von den pollensterilen Pflanzen geerntet und an Vermehrer verkauft. Pollensterile Pflanzen können manchmal (z. B. beim Mais) durch Entfahnen (d. h. mechanischem Entfernen der männlichen Geschlechtsorgane bzw. der männlichen Blüten), produziert werden; es ist jedoch üblicher, dass die Pollensterilität auf genetischen Determinanten im Pflanzengenom beruht. In diesem Fall, insbesondere dann, wenn es sich bei dem gewünschten Produkt, das man von den Hybridpflanzen ernten will, um die Samen handelt, ist es üblicherweise günstig, sicherzustellen, dass die Pollenfertilität in Hybridpflanzen, die die für die Pollensterilität verantwortlichen genetischen Determinanten enthalten, völlig restoriert wird. Dies kann erreicht werden, indem sichergestellt wird, dass die männlichen Kreuzungspartner entsprechende Fertilitätsrestorergene besitzen, die in der Lage sind, die Pollenfertilität in Hybridpflanzen, die die genetischen Determinanten, die für die Pollensterilität verantwortlich sind, enthalten, zu restorieren. Genetische Determinanten für Pollensterilität können im Cytoplasma lokalisiert sein. Beispiele für cytoplasmatische Pollensterilität (CMS) wurden zum Beispiel für Brassica-Arten beschrieben (WO 1992/005251, WO 1995/009910, WO 1998/27806, WO 2005/002324, WO 2006/021972 und US 6,229,072). Genetische Determinanten für Pollensterilität können jedoch auch im Zellkerngenom lokalisiert sein. Pollensterile Pflanzen können auch mit Methoden der pflanzlichen Biotechnologie, wie Gentechnik, erhalten werden. Ein besonders günstiges Mittel zur Erzeugung von pollensterilen Pflanzen ist in WO 89/10396 beschrieben, wobei zum Beispiel eine Ribonuklease wie eine Barnase selektiv in den Tapetumzellen in den Staubblättern exprimiert wird. Die Fertilität kann dann durch Expression eines Ribonukleasehemmers wie Barstar in den Tapetumzellen restoriert werden (z. B. WO 1991/002069).

Pflanzen oder Pflanzensorten (die mit Methoden der Pflanzenbiotechnologie, wie der Gentechnik, erhalten werden), die erfindungsgemäß behandelt werden können, sind herbizidtolerante Pflanzen, d. h. Pflanzen, die gegenüber einem oder mehreren vorgegebenen Herbiziden tolerant gemacht worden sind. Solche Pflanzen können entweder durch genetische Transformation oder durch Selektion von Pflanzen, die eine Mutation enthalten, die solch eine Herbizidtoleranz verleiht, erhalten werden.

Herbizidtolerante Pflanzen sind zum Beispiel glyphosatetolerante Pflanzen, d. h. Pflanzen, die gegenüber dem Herbizid Glyphosate oder dessen Salzen tolerant gemacht worden sind. So können zum Beispiel glyphosatetolerante Pflanzen durch Transformation der Pflanze mit einem Gen, das für das Enzym 5-Enolpyruvylshikimat-3-phosphatsynthase (EPSPS) kodiert, erhalten werden. Beispiele für solche EPSPS-Gene sind das AroA-Gen (Mutante CT7) des Bakterium *Salmonella typhimurium* (Comai et al., Science (1983), 221, 370-371), das CP4-Gen des Bakteriums *Agrobacterium sp.* (Barry et al., Curr. Topics Plant Physiol. (1992), 7, 139-145), die Gene, die für eine EPSPS aus der Petunie (Shah et al., Science (1986), 233, 478-481), für eine EPSPS aus der Tomate (Gasser et al., J. Biol. Chem. (1988), 263, 4280-4289) oder für eine EPSPS aus Eleusine (WO 2001/66704) kodieren. Es kann sich auch um eine mutierte EPSPS handeln, wie sie zum Beispiel in EP-A 0837944, WO 2000/066746, WO 2000/066747 oder WO 2002/026995 beschrieben ist. Glyphosatetolerante Pflanzen können auch dadurch erhalten werden, dass man ein Gen exprimiert, das für ein Glyphosate-Oxidoreduktase-Enzym, wie es in US 5,776,760 und US 5,463,175 beschrieben ist, kodiert. Glyphosatetolerante Pflanzen können auch dadurch erhalten werden, dass man ein Gen exprimiert, das für ein Glyphosate-acetyltransferase-Enzym, wie es in z. B. WO 2002/036782, WO 2003/092360, WO 2005/012515 und WO 2007/024782 beschrieben ist, kodiert. Glyphosatetolerante Pflanzen können auch dadurch erhalten werden, dass man Pflanzen, die natürlich vorkommende Mutationen der oben erwähnten Gene, wie sie zum Beispiel in WO 2001/024615 oder WO 2003/013226 beschrieben sind, enthalten, selektiert.

Sonstige herbizidresistente Pflanzen sind zum Beispiel Pflanzen, die gegenüber Herbiziden, die das Enzym Glutaminsynthase hemmen, wie Bialaphos, Phosphinotricin oder Glufosinate, tolerant gemacht worden sind. Solche Pflanzen können dadurch erhalten werden, dass man ein Enzym exprimiert, das das Herbizid oder eine Mutante des Enzyms Glutaminsynthase, das gegenüber Hemmung resistent ist, entgiftet. Solch ein wirksames entgiftendes Enzym ist zum Beispiel ein Enzym, das für ein Phosphinotricin-acetyltransferase kodiert (wie zum Beispiel das bar- oder pat-Protein aus Streptomyces-Arten). Pflanzen, die eine exogene Phosphinotricin-acetyltransferase exprimieren, sind zum Beispiel in US 5,561,236; US 5,648,477; US 5,646,024; US 5,273,894; US 5,637,489; US 5,276,268; US 5,739,082; US 5,908,810 und US 7,112,665 beschrieben.

Weitere herbizidtolerante Pflanzen sind auch Pflanzen, die gegenüber den Herbiziden, die das Enzym Hydroxyphenylpyruvatdioxygenase (HPPD) hemmen, tolerant gemacht worden sind. Bei den Hydroxyphenylpyruvatdioxygenasen handelt es sich um Enzyme, die die Reaktion, in der para-Hydroxyphenylpyruvat (HPP) zu Homogentisat umgesetzt wird, katalysieren. Pflanzen, die gegenüber HPPD-Hemmern tolerant sind, können mit einem Gen, das für ein natürlich vorkommendes resistentes HPPD-Enzym kodiert, oder einem Gen, das für ein mutiertes HPPD-Enzym gemäß WO 1996/038567, WO 1999/024585 und WO 1999/024586 kodiert, transformiert werden. Eine Toleranz gegenüber HPPD-Hemmern kann auch dadurch erzielt werden, dass man Pflanzen mit Genen transformiert, die für gewisse Enzyme kodieren, die die Bildung von Homogentisat trotz Hemmung des nativen HPPD-Enzyms durch den HPPD-Hemmer ermöglichen. Solche Pflanzen und Gene sind in WO 1999/034008 und WO 2002/36787 beschrieben. Die Toleranz von Pflanzen gegenüber HPPD-Hemmern kann auch dadurch verbessert werden, dass man Pflanzen zusätzlich zu einem Gen, das für ein HPPD-tolerantes Enzym kodiert, mit einem Gen transformiert, das für ein Prephenatdehydrogenase-Enzym kodiert, wie dies in WO 2004/024928 beschrieben ist.

Weitere herbizidresistente Pflanzen sind Pflanzen, die gegenüber Acetolactatsynthase (ALS)-Hemmern tolerant gemacht worden sind. Zu bekannten ALS-Hemmern zählen zum Beispiel Sulfonylharnstoff, Imidazolinon, Triazolopyrimidine, Pyrimidinyloxy(thio)benzoate und/oder Sulfonylaminocarbonyltriazolinon-Herbizide. Es ist bekannt, dass verschiedene Mutationen im Enzym ALS (auch als Acetohydroxysäure-Synthase, AHAS, bekannt) eine Toleranz gegenüber unterschiedlichen Herbiziden bzw. Gruppen von Herbiziden verleihen, wie dies zum Beispiel bei Tranel und Wright, Weed Science (2002), 50, 700-712, jedoch auch in US 5,605,011, US 5,378,824, US 5,141,870 und US 5,013,659, beschrieben ist. Die Herstellung von sulfonylharnstofftoleranten Pflanzen und imidazolinontoleranten Pflanzen ist in US 5,605,011; US 5,013,659; US 5,141,870; US 5,767,361; US 5,731,180; US 5,304,732; US 4,761,373; US 5,331,107; US 5,928,937; und US 5,378,824; sowie in der internationalen Veröffentlichung WO 1996/033270 beschrieben. Weitere imidazolinontolerante Pflanzen sind auch in z. B. WO 2004/040012, WO 2004/106529, WO 2005/020673, WO 2005/093093, WO 2006/007373, WO 2006/015376, WO 2006/024351 und WO 2006/060634 beschrieben. Weitere Sulfonylharnstoff- und Imidazolinon-tolerante Pflanzen sind auch in z.B. WO 2007/024782 beschrieben.

Weitere Pflanzen, die gegenüber Imidazolinon und/oder Sulfonylharnstoff tolerant sind, können durch induzierte Mutagenese, Selektion in Zellkulturen in Gegenwart des Herbizids oder durch Mutationszüchtung erhalten werden, wie dies zum Beispiel für die Sojabohne in US 5,084,082, für Reis in WO 1997/41218, für die Zuckerrübe in US 5,773,702 und WO 1999/057965, für Salat in US 5,198,599 oder für die Sonnenblume in WO 2001/065922 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, sind insektenresistente transgene Pflanzen, d.h. Pflanzen, die gegen Befall mit gewissen Zielinsekten resistent gemacht wurden. Solche Pflanzen können durch genetische Transformation oder durch Selektion von Pflanzen, die eine Mutation enthalten, die solch eine Insektenresistenz verleiht, erhalten werden.

Der Begriff "insektenresistente transgene Pflanze" umfasst im vorliegenden Zusammenhang jegliche Pflanze, die mindestens ein Transgen enthält, das eine Kodiersequenz umfasst, die für folgendes kodiert:
1) ein insektizides Kristallprotein aus *Bacillus thuringiensis* oder einen insektiziden Teil davon, wie die insektiziden Kristallproteine, die von Crickmore et al., Microbiology and Molecular Biology Reviews (1998), 62, 807-813, von Crickmore et al. (2005) in der Bacillus thuringiensis-Toxinnomenklatur aktualisiert, online bei: http://www.lifesci.sussex.ac.uk/Home/Neil_CrickmoreBt/), zusammengestellt wurden, oder insektizide Teile davon, z.B. Proteine der Cry-Proteinklassen Cry1Ab, Cry1Ac, Cry1F, Cry2Ab, Cry3Ae oder Cry3Bb oder insektizide Teile davon; oder
2) ein Kristallprotein aus Bacillus thuringiensis oder einen Teil davon, der in Gegenwart eines zweiten, anderen Kristallproteins als Bacillus thuringiensis oder eines Teils davon insektizid wirkt, wie das binäre Toxin, das aus den Kristallproteinen Cy34 und Cy35 besteht (Moellenbeck et al., Nat. Biotechnol. (2001), 19, 668-72; Schnepf et al., Applied Environm. Microb. (2006), 71, 1765-1774); oder
3) ein insektizides Hybridprotein, das Teile von zwei unterschiedlichen insektiziden Kristallproteinen aus Bacillus thuringiensis umfasst, wie zum Beispiel ein Hybrid aus den Proteinen von 1) oben oder ein Hybrid aus den Proteinen von 2) oben, z. B. das Protein Cry1A.105, das von dem Mais-Event MON98034 produziert wird (WO 2007/027777); oder
4) ein Protein gemäß einem der Punkte 1) bis 3) oben, in dem einige, insbesondere 1 bis 10, Aminosäuren durch eine andere Aminosäure ersetzt wurden, um eine höhere insektizide Wirksamkeit gegenüber einer Zielinsektenart zu erzielen und/oder um das Spektrum der entsprechenden Zielinsektenarten zu erweitern und/oder wegen Veränderungen, die in die Kodier-DNA während der Klonierung oder Transformation induziert wurden, wie das Protein Cry3Bb1 in Mais-Events MON863 oder MON88017 oder das Protein Cry3A im Mais-Event MIR 604; oder
5) ein insektizides sezerniertes Protein aus Bacillus thuringiensis oder Bacillus cereus oder einen insektiziden Teil davon, wie die vegetativ wirkenden insektentoxischen Proteine (vegetative insekticidal proteins, VIP), die unter http://www.lifesci.sussex.ac.uk/Home/Neil_Crickmore/Bt/vip.html angeführt sind, z. B. Proteine der Proteinklasse VIP3Aa; oder
6) ein sezerniertes Protein aus Bacillus thuringiensis oder Bacillus cereus, das in Gegenwart eines zweiten sezernierten Proteins aus Bacillus thuringiensis oder B. cereus insektizid wirkt, wie das binäre Toxin, das aus den Proteinen VIP1A und VIP2A besteht (WO 1994/21795); oder
7) ein insektizides Hybridprotein, das Teile von verschiedenen sezernierten Proteinen von Bacillus thuringiensis oder Bacillus cereus umfasst, wie ein Hybrid der Proteine von 1) oder ein Hybrid der Proteine von 2) oben; oder
8) ein Protein gemäß einem der Punkte 1) bis 3) oben, in dem einige, insbesondere 1 bis 10, Aminosäuren durch eine andere Aminosäure ersetzt wurden, um eine höhere insektizide Wirksamkeit gegenüber einer Zielinsektenart zu erzielen und/oder um das Spektrum der entsprechenden Zielinsektenarten zu erweitern und/oder wegen Veränderungen, die in die Kodier-DNA während der Klonierung oder Transformation induziert wurden (wobei die Kodierung für ein insektizides Protein erhalten bleibt), wie das Protein VIP3Aa im Baumwoll-Event COT 102.

Natürlich zählt zu den insektenresistenten transgenen Pflanzen im vorliegenden Zusammenhang auch jegliche Pflanze, die eine Kombination von Genen umfasst, die für die Proteine von einer der oben genannten Klassen 1 bis 8 kodieren. In einer Ausführungsform enthält eine insektenresistente Pflanze mehr als ein Transgen, das für ein Protein nach einer der oben genannten 1 bis 8 kodiert, um das Spektrum der entsprechenden Zielinsektenarten zu erweitern oder um die Entwicklung einer Resistenz der Insekten gegen die Pflanzen dadurch hinauszuzögern, dass man verschiedene Proteine einsetzt, die für dieselbe Zielinsektenart insektizid sind, jedoch eine unterschiedliche Wirkungsweise, wie Bindung an unterschiedliche Rezeptorbindungsstellen im Insekt, aufweisen.

Pflanzen oder Pflanzensorten (die nach Methoden der pflanzlichen Biotechnologie, wie der Gentechnik, erhalten wurden), die ebenfalls erfindungsgemäß behandelt werden können, sind gegenüber abiotischen Stressfaktoren tolerant. Solche Pflanzen können durch genetische Transformation oder durch Selektion von Pflanzen, die eine Mutation enthalten, die solch eine Stressresistenz verleiht, erhalten werden. Zu besonders nützlichen Pflanzen mit Stresstoleranz zählen folgende:
a. Pflanzen, die ein Transgen enthalten, das die Expression und/oder Aktivität des Gens für die Poly(ADP-ribose)polymerase (PARP) in den Pflanzenzellen oder Pflanzen zu reduzieren vermag, wie dies in WO 2000/004173 oder EP 04077984.5 oder EP 06009836.5 beschrieben ist.
b. Pflanzen, die ein stresstoleranzförderndes Transgen enthalten, das die Expression und/oder Aktivität der für PARG kodierenden Gene der Pflanzen oder Pflanzenzellen zu reduzieren vermag, wie dies z.B. in WO 2004/090140 beschrieben ist;
c. Pflanzen, die ein stresstoleranzförderndes Transgen enthalten, das für ein in Pflanzen funktionelles Enzym des Nicotinamidadenindinukleotid-Salvage-Biosynthesewegs kodiert, darunter Nicotinamidase, Nicotinatphosphoribosyltransferase, Nicotinsäuremononukleotidadenyltransferase, Nicotinamidadenindinukleotidsynthetase oder Nicotinamidphosphoribosyltransferase, wie dies z. B. in EP 04077624.7 oder WO 2006/133827 oder PCT/EP07/002433 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, weisen eine veränderte Menge, Qualität und/oder Lagerfähigkeit des Ernteprodukts und/oder veränderte Eigenschaften von bestimmten Bestandteilen des Ernteprodukts auf, wie zum Beispiel:
1) Transgene Pflanzen, die eine modifizierte Stärke synthetisieren, die bezüglich ihrer chemischphysikalischen Eigenschaften, insbesondere des Amylosegehalts oder des Amylose/Amylopektin-Verhältnisses, des Verzweigungsgrads, der durchschnittlichen Kettenlänge, der Verteilung der Seitenketten, des Viskositätsverhaltens, der Gelfestigkeit, der Stärkekorngröße und/oder Stärkekornmorphologie im Vergleich mit der synthetisierten Stärke in Wildtyppflanzenzellen oder -pflanzen verändert ist, so dass sich diese modifizierte Stärke besser für bestimmte Anwendungen eignet. Diese transgenen Pflanzen, die eine modifizierte Stärke synthetisieren, sind zum Beispiel in EP 0571427, WO 1995/004826, EP 0719338, WO 1996/15248, WO 1996/19581, WO 1996/27674, WO 1997/11188, WO 1997/26362, WO 1997/32985, WO 1997/42328, WO 1997/44472, WO 1997/45545, WO 1998/27212, WO 1998/40503, WO 99/58688, WO 1999/58690, WO 1999/58654, WO 2000/008184, WO 2000/008185, WO 2000/28052, WO 2000/77229, WO 2001/12782, WO 2001/12826, WO 2002/101059, WO 2003/071860, WO 2004/056999, WO 2005/030942, WO 2005/030941, WO 2005/095632, WO 2005/095617, WO 2005/095619, WO 2005/095618, WO 2005/123927, WO 2006/018319, WO 2006/103107, WO 2006/108702, WO 2007/009823, WO 2000/22140, WO 2006/063862, WO 2006/072603, WO 2002/034923, EP 06090134.5, EP 06090228.5, EP 06090227.7, EP 07090007.1, EP 07090009.7, WO 2001/14569, WO 2002/79410, WO 2003/33540, WO 2004/078983, WO 2001/19975, WO 1995/26407, WO 1996/34968, WO 1998/20145, WO 1999/12950, WO 1999/66050, WO 1999/53072, US 6,734,341, WO 2000/11192, WO 1998/22604, WO 1998/32326, WO 2001/98509, WO 2001/98509, WO 2005/002359, US 5,824,790, US 6,013,861, WO 1994/004693, WO 1994/009144, WO 1994/11520, WO 1995/35026 bzw. WO 1997/20936 beschrieben.
2) Transgene Pflanzen, die Nichtstärkekohlenhydratpolymere synthetisieren, oder Nichtstärkekohlenhydratpolymere, deren Eigenschaften im Vergleich zu Wildtyppflanzen ohne genetische Modifikation verändert sind. Beispiele sind Pflanzen, die Polyfructose, insbesondere des Inulin- und Levantyps, produzieren, wie dies in EP 0663956, WO 1996/001904, Wo 1996/021023, WO 1998/039460 und WO 1999/024593 beschrieben ist, Pflanzen, die alpha-1,4-Glucane produzieren, wie dies in WO 1995/031553, US 2002/031826, US 6,284,479, US 5,712,107, WO 1997/047806, WO 1997/047807, WO 1997/047808 und WO 2000/14249 beschrieben ist, Pflanzen, die alpha-1,6-verzweigte alpha-1,4-Glucane produzieren, wie dies in WO 2000/73422 beschrieben ist, und Pflanzen, die Alternan produzieren, wie dies in WO 2000/047727, EP 06077301.7, US 5,908,975 und EP 0728213 beschrieben ist.
3) Transgene Pflanzen, die Hyaluronan produzieren, wie dies zum Beispiel in WO 2006/032538, WO 2007/039314, WO 2007/039315, WO 2007/039316, JP 2006/304779 und WO 2005/012529 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, sind Pflanzen wie Baumwollpflanzen mit veränderten Fasereigenschaften. Solche Pflanzen können durch genetische Transformation oder durch Selektion von Pflanzen, die eine Mutation enthalten, die solche veränderten Fasereigenschaften verleiht, erhalten werden; dazu zählen:
a) Pflanzen wie Baumwollpflanzen, die eine veränderte Form von Cellulosesynthasegenen enthalten, wie dies in WO 1998/000549 beschrieben ist,
b) Pflanzen wie Baumwollpflanzen, die eine veränderte Form von rsw2- oder rsw3-homologen Nukleinsäuren enthalten, wie dies in WO 2004/053219 beschrieben ist;
c) Pflanzen wie Baumwollpflanzen mit einer erhöhten Expression der Saccharosephosphatsynthase, wie dies in WO 2001/017333 beschrieben ist;
d) Pflanzen wie Baumwollpflanzen mit einer erhöhten Expression der Saccharosesynthase, wie dies in WO 02/45485 beschrieben ist;
e) Pflanzen wie Baumwollpflanzen bei denen der Zeitpunkt der Durchlasssteuerung der Plasmodesmen an der Basis der Faserzelle verändert ist, z. B. durch Herunterregulieren der faserselektiven β-1,3-Glucanase, wie dies in WO 2005/017157 beschrieben ist;
f) Pflanzen wie Baumwollpflanzen mit Fasern mit veränderter Reaktivität, z. B. durch Expression des N-Acetylglucosamintransferasegens, darunter auch nodC, und von Chitinsynthasegenen, wie dies in WO 2006/136351 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, sind Pflanzen wie Raps oder verwandte Brassica-Pflanzen mit veränderten Eigenschaften der Ölzusammensetzung. Solche Pflanzen können durch genetische Transformation oder durch Selektion von Pflanzen, die eine Mutation enthalten, die solche veränderten Öleigenschaften verleiht, erhalten werden; dazu zählen:
a) Pflanzen wie Rapspflanzen, die Öl mit einem hohen Ölsäuregehalt produzieren, wie dies zum Beispiel in US 5,969,169, US 5,840,946 oder US 6,323,392 oder US 6,063, 947 beschrieben ist;
b) Pflanzen wie Rapspflanzen, die Öl mit einem niedrigen Linolensäuregehalt produzieren, wie dies in US 6,270828, US 6,169,190 oder US 5,965,755 beschrieben ist.
c) Pflanzen wie Rapspflanzen, die Öl mit einem niedrigen gesättigten Fettsäuregehalt produzieren, wie dies z. B. in US 5,434,283 beschrieben ist.

Besonders nützliche transgene Pflanzen, die erfindungsgemäß behandelt werden können, sind Pflanzen mit einem oder mehreren Genen, die für ein oder mehrere Toxine kodieren, sind die transgenen Pflanzen, die unter den folgenden Handelsbezeichnungen angeboten werden: YIELD GARD® (zum Beispiel Mais, Baumwolle, Sojabohnen), KnockOut® (zum Beispiel Mais), Bite-Gard® (zum Beispiel Mais), BT-Xtra® (zum Beispiel Mais), StarLink® (zum Beispiel Mais), Bollgard® (Baumwolle), Nucotn® (Baumwolle), Nucotn 33B® (Baumwolle), NatureGard® (zum Beispiel Mais), Protecta® und NewLeaf® (Kartoffel). Herbizidtolerante Pflanzen, die zu erwähnen sind, sind zum Beispiel Maissorten, Baumwollsorten und Sojabohnensorten, die unter den folgenden Handelsbezeichnungen angeboten werden: Roundup Ready® (Glyphosatetoleranz, zum Beispiel Mais, Baumwolle, Sojabohne), Liberty Link® (Phosphinotricintoleranz, zum Beispiel Raps), IMI® (Imidazolinontoleranz) und SCS® (Sylfonylharnstofftoleranz), zum Beispiel Mais. Zu den herbizidresistenten Pflanzen (traditionell auf Herbizidtoleranz gezüchtete Pflanzen), die zu erwähnen sind, zählen die unter der Bezeichnung Clearfield® angebotenen Sorten (zum Beispiel Mais).

Besonders nützliche transgene Pflanzen, die erfindungsgemäß behandelt werden können, sind Pflanzen, die Transformations-Events, oder eine Kombination von Transformations-Events, enthalten und die zum Beispiel in den Dateien von verschiedenen nationalen oder regionalen Behörden angeführt sind (siehe zum Beispiel http://gmoinfo.jrc.it/gmp_browse.aspx und http://www.agbios.com/dbase.php).

Die gute Wirkung der erfindungsgemäßen Enaminocarbonylverbindungen zur Bekämpfung von durch Vektoren (Insekten) übertragenen Virosen geht aus den nachfolgenden Beispielen hervor, die die Erfindung erläutern, ohne sie zu beschränken.

### Beispiel 1

### Wirksamkeit von Enaminocarbonylverbindungen gegen Populationen der Grünen Reiszikade Nephotettix sp. und gegen das Reis Tungro Virus auf transplantiertem Reis nach Spritzapplikation

In Laguna (Philippinen) wurden transplantierte Reispflanzen, die mit der Grünen Reiszikade *Nephotettix sp.* (Green Leafhopper, **GLH**) infiziert waren, einmal mit dem Wirkstoff 1-5 (SL 100, 25 g a.i. / ha bzw. SL 200, 25 g a.i. / ha) bzw. mit Cypermethrin (EC 050, 25 g a.i. / ha) besprüht. 3 und 15 Tage nach der Behandlung (3 bzw. 15 DAA) wurde die Wirksamkeit der Behandlung gegen die Grüne Reiszikade in % Abbott (Verhältnis der Anzahl von Grünen Reiszikaden auf behandelter Pflanze / Bestockungstrieb zur Anzahl von Grünen Reiszikaden auf Kontrolle) bzw. die Wirksamkeit gegen das von der Grünen Reiszikade übertragene Reis Tungro Virus in % Abbott (Mass für Wirksamkeit: % Lebende GLH Kontrolle - Lebende GLH nach Behandlung / Lebende GLH in der Kontrolle) bestimmt.

| | **Wirksamkeit gegen GLH** | | **Wirksamkeit gegen das Reis Tungro Virus** | |
|---|---|---|---|---|
| | **[% Abbott]** | | **[% Abbott]** | |
| **Verbindung** | **3 DAA** | **15 DAA** | **3 DAA** | **15 DAA** |
| Verbindung 1-5 SL 100, 25 g a.i. / ha | 98,9 | 39,7 | 24,6 | 21,1 |
| Verbindung 1-5 SL 200, 25 g a.i. / ha | 100 | 48,5 | 45,6 | 35,8 |
| Cypermethrin, EC 050, 25 g a.i. / ha | 83,9 | 33,3 | 22,8 | 16,5 |

1-5 SL zeigte eine schnellere Wirksamkeit (3 DAA) gegen GLH als der Standard Cypermethrin, und als SL 200 auch eine höhere Reduktion des Reis Tungro Virus, hervorgerufen durch eine bessere Kontrolle des Virusvektors GLH.

### Beispiel 2

### Wirksamkeit von Enaminocarbonylverbindungen gegen Populationen der Grünen Reiszikade Nephotettix sp. (Green leaf hopper, GLH) und gegen das Reis Tungro Virus auf Reis nach Spritzapplikation

In Masiit (Philippinen) wurden Reispflanzen, die mit der Grünen Reiszikade *Nephotettix sp.* (Green Leafhopper, **GLH**) infiziert waren, einmalig mit folgenden Verbindungen besprüht (Sprühvolumen: 225 / ha):

Wirkstoff I-5 (SL 100, 25 g a.i. / ha) bzw. Imidacloprid (SL 100, 25 g a.i. / ha) bzw. Cypermethrin (EC 050, 25 g a.i. / ha).

Die schnelle Wirksamkeit der Behandlung gegen die Grüne Reiszikade in % Abbott (Verhältnis der Anzahl von Grünen Reiszikaden auf behandelter Pflanze zur Anzahl von Grünen Reiszikaden auf Kontrolle) wurden 1, 3 und 7 Tage nach Behandlung (1, 3 bzw. 7 DAA) bestimmt. Die Wirksamkeit gegen das von der Grünen Reiszikade übertragene Reis Tungro Virus in % Abbott (Mass für Wirksamkeit: % Lebende GLH Kontrolle - Lebende GLH nach Behandlung / Lebende GLH in der Kontrolle) wurden 35, 49 und 63 Tage nach Behandlung (35, 49 bzw. 63 DAA) ausgewertet.

| | **Wirksamkeit gegen GLH** | | | **Wirksamkeit gegen das Reis Tungro Virus** | | |
|---|---|---|---|---|---|---|
| | **[% Abbott]** | | | **[% Abbott]** | | |
| **Verbindung** | **1** DAA | **3 DAA** | **7 DAA** | **35 DAA** | **49 DAA** | **63 DAA** |
| Wirkstoff 1-5, SL 100, 25 g a.i. / ha | 97 | 100 | 99 | 91 | 93 | 95 |
| Imidacloprid, SL 100, 25 g a.i. / ha | 99 | 100 | 97 | 32 | 30 | 93 |
| Cypermethrin, EC 050, 25 g a.i. / ha | 98 | 100 | 85 | 62 | 40 | 85 |

1-5 SL zeigte eine mit den Standards Imidacloprid und Cypermethrin vergleichbare schnelle Wirkung (1, 3 DAA) gegen GLH und wies zudem die beste Wirkung nach 7 Tagen auf. Insgesamt kam es zu einer höheren Reduktion des Reis Tungro Virus, insbesondere bei den früheren Probenahmezeitpunkten (35, 49 DAA).

### Beispiel 3

### Wirksamkeit von Enaminocarbonylverbindungen gegen Populationen der Grünen Reiszikade Nephotettix sp. und gegen das Reis Tungro Virus auf transplantiertem Reis nach Applikation in die Saatbox

In Laguna (Philippinen) wurden transplantierte Reispflanzen in 30 x 60 cm großen Anzuchtboxen, die mit der Grünen Reiszikade *Nephotettix sp.* (Green Leafhopper, **GLH**) infiziert waren, wie folgt behandelt:
Wirkstoff 1-5 (Variante A: GR 5, 0,3 g a.i / Box, einmalige Behandlung durch Verteilung des Granulats, Auswertung 30 bzw. 44 Tage nach Behandlung (30 bzw. 44 DAA))
Wirkstoff 1-5 (Variante B1: SL 300, 0,3 g a.i. / Box, einmalige Behandlung, Gießapplikation, Auswertung 30 bzw. 44 Tage nach Behandlung (30 bzw. 44 DAB))
Imidacloprid (Variante B2: FS 600 0, 25 g a.i. / Box, einmalige Behandlung, Gießapplikation, Auswertung 30 bzw. 44 Tage nach Behandlung (30 bzw. 44 DAB))

Cypermethrin (EC 050, 25 g a.i. / ha, zweimalige Behandlung im Abstand von 15 Tagen, Variante C+D Sprühapplikation, Auswertung 6 bzw. 20 Tage nach 2. Sprühapplikation (6 bzw. 20 DAD)).

Die Wirksamkeit der Behandlung gegen die Grüne Reiszikade in % Abbott (Verhältnis der Anzahl von Grünen Reiszikaden auf behandelter Pflanze zur Anzahl von Grünen Reiszikaden auf Kontrolle) bzw. die Wirksamkeit gegen das von der Grünen Reiszikade übertragene Reis Tungro Virus in % Abbott (Mass für Wirksamkeit: % Lebende GLH Kontrolle - Lebende GLH nach Behandlung / Lebende GLH in der Kontrolle) wurden zu den oben genannten Zeitpunkten bestimmt.

| | **Wirksamkeit gegen GLH** | | **Wirksamkeit gegen das Reis Tungro Virus** | |
|---|---|---|---|---|
| | **[% Abbott]** | | **[% Abbott]** | |
| **Verbindung** | **30 DAA bzw. 30 DAB bzw. 6 DAD** | **44 DAA bzw. 44 DAB bzw. 20 DAD** | **30 DAA bzw. 30 DAB bzw. 6 DAD** | **44 DAA bzw. 44 DAB bzw. 20 DAD** |
| Verbindung 1-5 GR 5, 0,3 g a.i / Box | 76,1 | 86,2 | 97,8 | 98,3 |
| Verbindung 1-5 SL 300, 0,3 g a.i. / Box | 83,6 | 91,7 | 98,9 | 97,1 |
| Imidacloprid FS 600, 0,25 g a.i. / Box | 91,3 | 92,0 | 100 | 98,2 |
| Cypermethrin EC 050, 25 g a.i. / ha | 31,4 | 27,3 | 0 | 2,2 |

1-5 GR und SL zeigten eine längere Wirkdauer gegen GLH als der Spritzstandard Cypermethrin, und als SL 300 auch eine vergleichbare Wirkung wie Imidacloprid nach Applikation in die Saatbox. Bei der Reduktion des Reis Tungro Virus Befalls erreichten 1-5 SL und GR das hohe Kontrollniveau von Imidacloprid und waren auch nach 44 DAA/DAB besser als der Standard Cypermethrin nach Spritzapplikation.

### Beispiel 4

### Wirksamkeit von Enaminocarbonylverbindungen gegen Populationen der grünen Pfirsichblattlaus Myzus persicae und gegen das Kartoffel Virus Y (PVY) auf Saatkartoffeln

In Faverolles et Coemy (Frankreich) wurden Saatkartoffeln, die mit der Grünen Pfirischblattlaus *Myzus persicae* infiziert waren, 8 mal im Abstand von je 7 Tagen mit folgenden Verbindungen besprüht:
Wirkstoff 1-5 (SL 100 + Öl (Mineralöl, Petroleum), 150 + 1 kg a.i./100 L (5 kg/ha)
Wirkstoff 1-5 (SL 200 + Öl (Mineralöl, Petroleum), 150 + 1 kg a.i./100 L (5 kg/ha)
Deltamethrin EW 15 + Vazil-Y (Petroleum Öl) 7,5 g a.i.+ 8200 mL Öl

Die Wirksamkeit der Behandlung gegen die Grüne Pfirischblattlaus in *% Abbott (Verhältnis der Anzahl von Grüner Pfirischblattlaus auf behandelter Pflanze zur Anzahl von grüner Pfirsichblattlaus auf Kontrolle)* wurde zu den folgenden Zeitpunkten bestimmt:

7 Tage nach der 2. Spritzung (7 DAB), 7 Tage nach der 3. Spritzung (7 DAC), 4 Tage nach der 5. Spritzung (4 DAE) und 7 Tage nach der 6. Spritzung (7 DAF).

Die Wirksamkeit gegen das von der Grünen Pfirsichblattlaus übertragene Kartoffel Virus Y (PVY) wurde 10 Tage nach der 8. (letzten) Spritzung bestimmt (10 DAH).

| | **Wirksamkeit gegen *Myzus persicae*** | | | | **Wirksamkeit gegen Kartoffel Virus Y** |
|---|---|---|---|---|---|
| | **[% Abbott]** | | | | **[% Abbott]** |
| **Verbindung** | **7 DAB** | **7 DAC** | **4 DAE** | **7 DAF** | **10 DAH** |
| Wirkstoff 1-5 (SL 100 + Öl, 150 g a.i. + 5 kg /ha | 99,7 | 99,8 | 100 | 100 | 48,5 |
| Wirkstoff 1-5 (SL 200 + Öl, 150 g a.i. + 5 kg /ha | 98,4 | 99,9 | 100 | 100 | 61,8 |
| Deltamethrin EW 7,5g a.i. + Vazil-Y, 6,7 kg /ha | 36,2 | 59,2 | 97,5 | 63,5 | 79,4 |

I-5 SL zeigte eine exzellente Wirkung gegen den Virus Vektor *Myzus persicae*, besser als der Standard Deltamethrin. In Kombination mit Petroleumöl zeigte die 1-5 SL 200 eine in etwa vergleichbare Wirkung wie die Kombination von Deltamethrin mit Petroleumöl.

### Beispiel 5

### Wirksamkeit von Enaminocarbonylverbindungen gegen adulte Individuen der weißen Fliege Bemisia tabaci und damit verbundene indirekte Wirkung gegen eine Sekundärinfektion mit dem Geminivirus Tomato golden mosaic virus ( TGMV) an Tomaten

In Paulinas (Brasilien) wurden Tomatenpflanzen bei Auftreten der ersten Individuen der weißen Fliege *Bemisia tabaci* vier mal mit folgenden Verbindungen besprüht (Sprühvolumen: 500 - 6001 / ha): Wirkstoff I-5 (SL 100, 150 g a.i. / ha) bzw. Imidacloprid (SL 200, 150 g / ha)

Die Wirksamkeit der Behandlung gegen Adulte der weißen Fliege in % Abbott (Verhältnis der Anzahl von weißer Fliege auf behandelter Pflanze zur Anzahl von weißer Fliege auf Kontrolle) wurde zu den folgenden Zeitpunkten bestimmt:
1 Tag und 4 Tage nach erfolgter erster Spritzung (1 bzw. 4 DAA)
1 Tag und 7 Tage nach erfolgter vierter Spritzung (1 bzw. 7 DAD).

Zudem erfolgte eine visuelle Auswertung auf Schadsymptome (weitere Ausbreitung der Infektion) des von der weißen Fliege übertragenenen *Tomato golden mosaic virus* (TGMV).

| | **Wirksamkeit gegen Bemisia tabaci** | | | | **Sekundärinfektion von TGMV** |
|---|---|---|---|---|---|
| | **[% Abbott]** | | | | **[visuell]** |
| **Verbindung** | **1 DAA** | **4 DAA** | **1 DAD** | **7 DAD** | **1 DAA und 7 DAD** |
| Wirkstoff 1-5 (SL 100) 150 g a.i. /ha | 85,8 | 96,7 | 86,7 | 86,3 | Kaum weitere Ausbreitung |
| Imidacloprid (SL 200, 150 g a.i. /ha | 0 | 61,9 | 16,9 | 18,8 | Pflanzen durchweg befallen |

1-5 SL zeigte bereits 1 DAA eine exzellente Wirkung gegen den Virus Vektor *Bemisia tabaci.* Der bisherige Standard Imidacloprid zeigte nur geringe Wirkung. Dies trift auch auf die Wirkung nach wiederholter Applikation zu. Eine weitere Ausbreitung (Sekundärinfektion) des *Tomato golden mosaic virus* (TGMV) wurde offentsichtlich durch die schnelle Kontrolle des Virus Vektors *Bemisia tabaci* unterbunden.

## Patentansprüche

1. Verwendung von Verbindungen der Formel (I) 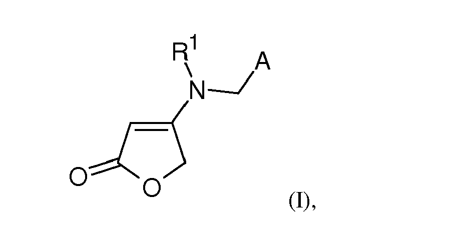 in welcher
A für den Rest 6-Fluor-pyrid-3-yl, 6-Chlor-pyrid-3-yl, 6-Brom-pyrid-3-yl, 5-Fluor-6-chlor-pyrid-3-yl, 2-Chlor-1,3-thiazol-5-yl oder 5,6-Dichlor-pyrid-3-yl steht und
R¹ für Methyl, Cyclopropyl, Methoxy, 2-Fluorethyl oder 2,2-Difluor-ethyl steht,
zur Bekämpfung von durch Insekten übertragenen Virosen.

2. Verwendung nach Anspruch 1, **dadurch gekennzeichnet, dass** die Verbindung der Formel (I) ausgewählt ist aus der Gruppe bestehend aus den Verbindungen der Formeln (I-1), (1-2), (I-3), (I-4), (I-5), (I-6), (I-7), (I-8), (I-9) und (I-10).

3. Verwendung von Wirkstoffkombinationen enthaltend mindestens eine Verbindung ausgewählt aus der Gruppe der Verbindungen der Formel (1-1), (1-2), (1-3), (1-4), (1-5), (1-6), (1-7), (1-8), (1-9) und (I-10) und mindestens ein Insektizid ausgewählt aus der Gruppe bestehend aus den Verbindungen (2-1) bis (2-37) zur Bekämpfung von durch Insekten übertragenen Virosen.

4. Verwendung nach einem der Ansprüche 1 bis 3 zur Bekämpfung von Virosen, die durch Insekten, die gegenüber einer oder mehrerer Insektizidklassen resistent sind, übertragen werden.

5. Verwendung nach Anspruch 4, **dadurch gekennzeichnet, dass** die Insekten gegenüber Organophosphaten, Carbamaten, Organochlorverbindungen, Pyrethroide und/oder Neonikotinoiden resistent sind.

6. Verwendung von Verbindungen gemäß Anspruch 1 oder 2 oder von Wirkstoffkombinationen gemäß Anspruch 3 zur Bekämpfung von durch Insekten übertragenen Virosen in Soja, Baumwolle, Rüben, Mais, Reis, Kartoffeln, Tabak, Getreide, tropische Früchte, Gemüse oder Zierpflanzen.

7. Verwendung nach Anspruch 6 zur Bekämpfung von durch Insekten übertragenen Virosen in Rüben, Mais, Reis, Kartoffel, Tabak, Getreide und Gemüse.

8. Verwendung von Verbindungen gemäß Anspruch 1 oder 2 oder von Wirkstoffkombinationen gemäß Anspruch 3 zur Bekämpfung von durch Aphiden, Weißen Fliegen, Zikaden, Thripse, Spinnmilben, Läusen, Käfern oder Nematoden übertragenen Virosen.

9. Verwendung nach einem der Ansprüche 1 bis 8, **dadurch gekennzeichnet, dass** das Saatgut der vor durch Insekten übertragenen Virosen zu schützenden Pflanzen mit den Verbindungen nach Anspruch 1 oder 2 oder mit den Wirkstoffkombinationen von Anspruch 3 behandelt werden.
